# EUROPEAN PATENT SPECIFICATION

(11) **EP 3 711 433 B1**
(45) Date of publication and mention of the grant of the patent: **15.04.2026**
(21) Application number: 18808081.6
(22) Date of filing: 16.11.2018
(51) Int. Cl.: H04W 74/00, H04W 72/0446, H04W 74/0833

(54) **MOBILE TERMINAL, CELL NODE, TELECOMMUNICATIONS SYSTEM AND METHOD OF OPERATING THE SAME**
MOBILES ENDGERÄT, ZELLKNOTEN, TELEKOMMUNIKATIONSSYSTEM UND VERFAHREN ZUM BETRIEB DAVON
TERMINAL MOBILE, NOEUD DE CELLULE, SYSTÈME DE TÉLÉCOMMUNICATIONS ET PROCÉDÉ D'EXPLOITATION CORRESPONDANT

(30) Priority: 17.11.2017 GB 201719081; 27.11.2017 GB 201719676
(43) Date of publication of application: 23.09.2020
(73) Proprietor: Vodafone IP Licensing Limited, Newbury, Berkshire RG14 2FN (GB)
(72) Inventor: SUBRAMANI, Siva, London Greater London W2 6BY (GB); KULAKOV, Alexey, London Greater London W2 6BY (GB)
(74) Representative: Boult Wade Tennant LLP
(86) International application number: PCT/GB2018/053324
(87) International publication number: WO 2019/097246

(56) References cited:
- WO-A1-2016/168024
- WO-A1-2017/046672
- WO-A1-2017/151187

## Description

### Field of invention

The present disclosure relates to a mobile terminal, a cell node, a telecommunications system and methods of operating a mobile terminal, a cell node, a telecommunications system. In particular, the present disclosure relates to attempts to reduce the latency, in a mobile telecommunications network.

### Background

Legacy mobile telecommunications networks have been designed for terminals and other devices that have different capabilities compared the devices that are available today. Also, as more data communications are being carried over the mobile network, when there were previously considered to be better suited for fixed networks, there is a demand for supporting a greater spectrum of types of communications on mobile networks. At one end of the spectrum, there has been demand for high latency communications (e.g. associated with low data rate, low power devices such as smart meters). At the other end of the spectrum, there has been a greater demand for low latency communications.

To that end, LTE latency reduction is an important LTE enhancement that is currently being considered in the 3GPP standardisation body, in particular in respect of the Release-15 standards. Most of the enhancements are focussed particularly on the reduction of the Transmission Time Interval (TTI). For example, the skilled reader is direct to Shortened TTI and Processing Time work item [1], as well as the Semi-persistent scheduling through the Faster Uplink work item [2].

In the first item [1], the mobile device first connects to the cell (so changes to RRC_CONNECTED state) and receives uplink or downlink grants. Then the document proposes changes for reducing the latency by reducing the control and data channels transmission time from 1ms TTI to 2 or 3 OFDM symbol TTI.

For the second item [2], the uplink waiting period for the Physical Uplink Control Channel (PUCCH) to send the scheduling request (SR) is reduced from 10ms to 1ms by making the Semi-Persistent Scheduling (SPS) resources available every sub-frame. SPS provides an arrangement where resources are pre-allocated for at least two separate sub-frames, rather than having to be allocated for each sub-frame. However, this modified SPS method considers the regular LTE 1ms sub-frame TTI only and does not consider the short-TTI (sTTI) options.

WO 2016/053844 [3] discusses a downlink and uplink channel with low latency wherein the mobile terminal connects to the network and then uses a reduced TTI with a view to reducing latency in the communications.

EP 2077694 [4] discusses an apparatus and method for transmitting and receiving enhanced RACH in a mobile communication system wherein the terminal connects to an "enhanced" network (e.g. 3G, 3.5G, 3.5G+) and, once the terminal is connected, the terminal uses low latency communications As in [1] and [2], in [3] and [4], the mobile terminal connects to the network and can then use low latency communications with the network. In other words, the techniques provided in these documents provide alternative ways of trying to reduce the latency of (user and/or control) data communications of connected terminals.

While there has already been a number of discussions on how to reduce the latency in mobile networks, in particular in LTE networks, it is desirable to provide further improvements to try to reduce the latency in mobile networks in an attempt to better respond to the demand for low latency communications via mobile networks. WO 2016/168024 A1 relates to random access for low latency communications. WO 2017/151187 A1 relates to low latency PRACH design in an unlicensed spectrum. WO 2017/046672 A1 relates to a random access procedure for latency reduction.

### Summary of invention

The invention is defined by the claims.

According to a first aspect of the present disclosure, there is provided a method of operating a mobile terminal in a telecommunications network. The mobile terminal is operable to communicate with a cell node of the telecommunications network. The method comprising the mobile terminal determining whether to use a low latency access procedure or a higher latency access procedure; if it is determined to use the low latency access procedure, generating an access request message of a low latency type, wherein the low latency type of access request message indicates that the mobile terminal is using the low latency access procedure; if it is determined to use the higher latency access procedure, generating an access request message of a higher latency type, wherein the higher latency type of access message indicates that the mobile terminal is using the higher latency access procedure; and transmitting the generated access request message to the cell node. The high latency access procedure and the low latency access procedure comprise message sequences comprising the same number of messages.

The low latency access procedure is generally expected to be configured to complete in a shorter time than the higher latency access procedure. For example, the minimum time for the low latency access procedure to complete would be less than the minimum time for the higher latency procedure to complete. While in some cases, the maximum time for the low latency access procedure could potentially be more than the minimum time for the higher latency access procedure, in most cases the low latency procedure will be quicker to complete. For example, of all the possible completion times for both access procedure, it is expected that the average and/or median completion time for the low latency access procedure will be less than the average and/or median (respectively) completion time for the higher latency access procedure.

In one example, generating an access request message comprises selecting one of a preamble format for low latency access request messages and a preamble format for higher latency access request messages and generating an access request message based on the selected format, wherein a preamble format is defined by at least one of a sequence time and a cyclic prefix time for the access request message. Generating an access request message may comprise selecting a preamble for the access request message, wherein the preamble is selected from a first set of preambles for generating an access request message of the low latency type; and wherein the preamble is selected from a separate set of preambles for generating an access request message of the higher latency type.

The determining may be based on one or more of: a low latency capability indication transmitted by the cell node and on a mobile terminal configuration.

The method further comprises the mobile terminal, upon determining to use a low latency access procedure, at least one of:, setting a shorter time window for listening for an access response message from the cell node compared to the time window for listening for an access response sent by the cell node in response to an access request message of the higher latency type; and setting at least one processing time window to a shorter value compared to the value for the corresponding at least one processing time window for the higher latency access procedure, wherein the processing time window provides a time window, from the receipt of a message from the cell node, for the mobile terminal to process the received message, generate a subsequent message in accordance with the corresponding access procedure and transmit the generated subsequent message to the cell node.

According to another aspect of the present disclosure, there is provide a method of operating a cell node of a telecommunications network, the cell node being operable to communicate with a mobile terminal, the method comprising the cell node: receiving an access request message from the mobile terminal; determining whether the access request message is of a low latency type or of a higher latency type, wherein the low latency type of access request message indicates that the mobile terminal is using a low latency access procedure and wherein the higher latency type of access request message indicates that the mobile terminal is using a higher latency access procedure; if it is determined that the access request is of the low latency type, transmitting an access response message to the mobile terminal in accordance with the low latency access procedure; if it is determined that the access request is of the higher latency type, transmitting an access response message to the mobile terminal in accordance with the higher latency access procedure. The higher latency access procedure and the low latency access procedure comprise message sequences comprising the same number of messages

The method may further comprise the cell node transmitting a low latency capability indication indicating that the cell node supports the low latency and/or higher latency access procedures.

The determining may comprise identifying one of a low latency preamble format and a higher latency preamble format being used in the received access request message, wherein a preamble format is defined by at least one of a sequence time and a cyclic prefix time for the access request message; and determining whether the access request message is of a low latency type or of a higher latency type based the preamble format identified for the received access request message.

The determining may comprise at least one of: upon identifying a preamble for the access request message as being from a first set of preambles used for generating an access request message of the low latency type, determining that the access request message is of the low latency type; and upon identifying a preamble for the access request message as being from a separate set of preambles used for generating an access request message of the higher latency type, determining that the access request message is of the higher latency type.

The method further comprises, upon determining that the access request message is of the low latency type, at least one of: setting a shorter time window for transmitting an access response message compared to the time window for transmitting an access response in response to an access request message of the higher latency type; and setting at least one processing time window to a shorter value compared to the value for the corresponding at least one processing time window for the higher latency access procedure, wherein the processing time window provides a time window, from the receipt of a message from the mobile terminal, for the cell node to process the received message, generate a subsequent message in accordance with the corresponding access procedure and transmit the generated subsequent message to the mobile terminal.

In accordance with a further aspect of the present disclosure, there is provided a method in a telecommunications network, the telecommunications network comprising a cell node being operable to communicate with a mobile terminal. The method comprises: the mobile terminal determining whether to use a low latency access procedure or a higher latency access procedure; if it is determined to use the low latency access procedure, the mobile terminal generating an access request message of a first type, wherein the first type of access request message indicates that the mobile terminal is using the low latency access procedure; if it is determined to use the higher latency access procedure, the mobile terminal generating an access request message of a second type, wherein the second type of access message indicates that the mobile terminal is using the higher latency access procedure; the mobile terminal transmitting the generated access request message to the cell node; upon receipt of the access request message, the cell node determining whether the access request message is of the first type or of the second type; if it is determined that the access request is of the first type, transmitting an access response message to the mobile terminal in accordance with the low latency access procedure; and if it is determined that the access request is of the second type, transmitting an access response message to the mobile terminal in accordance with the higher latency access procedure. The higher latency access procedure and the low latency access procedure comprises message sequences comprising the same number of messages. Upon determining to use a low latency access procedure, the method comprises at least one of: the mobile terminal setting a shorter time window for listening for an access response message from the cell node compared to the time window for listening for an access response sent by the cell node in response to an access request message of the higher latency type; and the mobile terminal setting at least one processing time window to a shorter value compared to the value for the corresponding at least one processing time window for the higher latency access procedure, wherein the processing time window provides a time window, from the receipt of a message from the cell node, for the mobile terminal to process the received message, generate a subsequent message in accordance with the corresponding access procedure and transmit the generated subsequent message to the cell node. Upon determining that the access request message is of the low latency type, the method comprises at least one of: the cell node setting a shorter time window for transmitting an access response message compared to the time window for transmitting an access response in response to an access request message of the higher latency type; and the cell node setting at least one processing time window to a shorter value compared to the value for the corresponding at least one processing time window for the higher latency access procedure, wherein the processing time window provides a time window, from the receipt of a message from the mobile terminal, for the cell node to process the received message, generate a subsequent message in accordance with the corresponding access procedure and transmit the generated subsequent message to the mobile terminal.

In any of the methods discussed above, the low latency and higher latency access procedures may each be associated with a low latency and a higher latency response time, respectively, for the cell node to respond to the access request message from the mobile terminal, the low latency response time being shorter than the other response time. A response time may be one of a time window, a time slot or a timer for the cell node to transmit an access response message to the mobile terminal.

In any of the methods discussed above, the cell node may be one of a base station, a relay node, a small cell or a remote radio head. Also, the low latency and higher latency access procedures may comprise a Random Access Channel "RACH" procedure and/or the low latency and higher latency access procedures may comprise a Radio Resource Control "RRC" connection procedure.

According to another aspect of the present disclosure, there is provided a mobile terminal for use in a telecommunications network, the mobile terminal being operable to communicate with a cell node of the telecommunications network. The mobile terminal is further configured to: determine whether to use a low latency access procedure or a higher latency access procedure; generate, if it is determined to use the low latency access procedure, an access request message of a first type, wherein the first type of access request message indicates that the mobile terminal is using the low latency access procedure; generate, if it is determined to use the higher latency access procedure, an access request message of a second type, wherein the second type of access message indicates that the mobile terminal is using the higher latency access procedure; transmit the generated access request message to the cell node; and upon determining to use a low latency access procedure, at least one of: set a shorter time window for listening for an access response message from the cell node compared to the time window for listening for an access response sent by the cell node in response to an access request message of the higher latency type; and set at least one processing time window to a shorter value compared to the value for the corresponding at least one processing time window for the higher latency access procedure, wherein the processing time window provides a time window, from the receipt of a message from the cell node, for the mobile terminal to process the received message, generate a subsequent message in accordance with the corresponding access procedure and transmit the generated subsequent message to the cell node. The higher latency access procedure and the low latency access procedure comprise message sequences comprising the same number of messages.

According to yet another aspect of the present disclosure, there is provided a cell node for use a telecommunications network, the cell node being operable to communicate with a mobile terminal. The cell node being further operable to receive an access request message from the mobile terminal; determine whether the access request message is of a first type or of a second type, wherein the first type of access request message indicates that the mobile terminal is using a low latency access procedure and wherein the second type of access request message indicates that the mobile terminal is using a higher latency access procedure; transmit, if it is determined that the access request is of the first type, an access response message to the mobile terminal in accordance with the low latency access procedure; transmit, if it is determined that the access request is of the second type, an access response message to the mobile terminal in accordance with the higher latency access procedure; and upon determining that the access request message is of the low latency type, at least one of: set a shorter time window for transmitting an access response message compared to the time window for transmitting an access response in response to an access request message of the higher latency type; and set at least one processing time window to a shorter value compared to the value for the corresponding at least one processing time window for the higher latency access procedure, wherein the processing time window provides a time window, from the receipt of a message from the mobile terminal, for the cell node to process the received message, generate a subsequent message in accordance with the corresponding access procedure and transmit the generated subsequent message to the mobile terminal. The higher latency access procedure and the low latency access procedure comprise message sequences comprising the same number of messages. According to a further aspect of the present disclosure, there is provided a telecommunications network, the telecommunications network comprising a cell node being operable to communicate with a mobile terminal. The mobile terminal of the system is operable to: determine whether to use a low latency access procedure or a higher latency access procedure; generate, if it is determined to use the low latency access procedure, an access request message of a first type, wherein the first type of access request message indicates that the mobile terminal is using the low latency access procedure; generate, if it is determined to use the higher latency access procedure, an access request message of a second type, wherein the second type of access message indicates that the mobile terminal is using the higher latency access procedure; and transmit the generated access request message to the cell node. The cell node of the system is operable to determine, upon receipt of the access request message, whether the access request message is of the first type or of the second type; transmit, if it is determined that the access request is of the first type, an access response message to the mobile terminal in accordance with the low latency access procedure; and transmit, if it is determined that the access request is of the second type, an access response message to the mobile terminal in accordance with the higher latency access procedure. The mobile terminal is further operable to: upon determining to use a low latency access procedure, at least one of: set a shorter time window for listening for an access response message from the cell node compared to the time window for listening for an access response sent by the cell node in response to an access request message of the higher latency type; and set at least one processing time window to a shorter value compared to the value for the corresponding at least one processing time window for the higher latency access procedure, wherein the processing time window provides a time window, from the receipt of a message from the cell node, for the mobile terminal to process the received message, generate a subsequent message in accordance with the corresponding access procedure and transmit the generated subsequent message to the cell node. The cell node is further operable to, at least one of: upon determining to use a low latency access procedure: set a shorter time window for listening for an access response message from the cell node compared to the time window for listening for an access response sent by the cell node in response to an access request message of the higher latency type, and set at least one processing time window to a shorter value compared to the value for the corresponding at least one processing time window for the higher latency access procedure, wherein the processing time window provides a time window, from the receipt of a message from the cell node, for the mobile terminal to process the received message, generate a subsequent message in accordance with the corresponding access procedure and transmit the generated subsequent message to the cell node. The higher latency access procedure and the low latency access procedure comprise message sequences comprising the same number of messages

According to another aspect of the present of the present disclosure, there is provided a computer program comprising instructions for carrying out any of the above methods, when executed.

### List of Figures

Example implementations of the techniques discussed in the present disclosure will now be described with reference with the following drawings:
Figure 1 illustrates a call flow for a current LTE Random Access Procedure;
Figure 2 illustrates a call flow for an example low latency access procedure;
Figure 3 illustrates a RACH preamble in accordance with the current systems;
Figure 4 illustrates a total RACH duration for a RACH preamble;
Figure 5 illustrates the transmission of a RACH preamble by three different terminals;
Figure 6 illustrates an example format for a low latency access request message;
Figure 7 illustrates a possible distribution of TTls within a sub-frame;
Figure 8 illustrates an example identification of a later TTI for a receiving or sending a further message, based on the TTI distribution of Figure 7;
Figure 9 illustrates an example flow chart for providing a low latency access network procedure; and
Figure 10 illustrate an example device for use in a mobile telecommunications network.

As the skilled person will appreciate, these figures are provided for illustrative purposes only and are not intended to limit the scope of the present disclosure.

### Description

As discussed above, numerous suggestions have been made to reduce the latency in the communications between a mobile terminal and the network by reducing the latency for user data and/or control data communications. While this is expected to be deemed good enough in some cases, it is herein provided an arrangement wherein the latency can be further reduced by reducing the latency for the mobile terminal to access the network. While this low-latency access is potentially considered less critical in a context of low-latency/high-data utilisation of the network (as the amount of resources used in the access is greatly outnumbered by the amount of resources used in the exchange of data), with the present arrangement, the proposed low latency access arrangement can have a significant positive impact on a number of low latency use cases, in particular in case of low-latency/low-data use cases or ultra-low latency use cases (whether they are associated with a large or small amount of data transmission for each access/connection to the network).

However, even considering the possibility that the network access procedure could be made more efficient in terms of latency would clearly not be what the telecom engineer's instinct would be because:
(1) until the terminal is in a connected state with the network, the network if not fully aware of which terminal it is communicating to, let alone of its capabilities as the terminal has no way of communicating this information to the network prior to the transmission of the first RACH message
(2) this is critical part of the operation of a network that is difficult to change because it has to be compatible with the legacy operations -or previous terminals would not be able to operate. Again the fact that the terminals could not communicate whether they are legacy or "new" terminals prior to the RACH procedure also provides a significant barrier for making changes to the RACH procedure.

In order to circumvent some of these barriers, different RACH mechanisms have sometimes been proposed instead, such as the one discussed in WO 2017/151187 [6] which provides a RACH message with additional information. However, this has been designed for use on a different RACH procedure which is specific to an unlicensed spectrum and which cannot be used on the legacy network. The use of this different RACH procedure is therefore limited as it is not applicable to a conventional mobile network.

Despite these barriers, the teachings of the present disclosure provide a network access procedure that can be modified with a view to minimising the impact on the legacy RACH procedures while still providing a low-latency access procedure from the first message of the procedure.

Looking first at a conventional telecommunication network, a device that wishes to communicate with the network will request access to the network so that it can setup a connection and then communicate with the network. More specifically, in current networks, these steps can be summarised as follows:
1. A RACH or RACH-like procedure. In this procedure, the terminal sends a random access request message (message1) to the network which carries a randomly selected preamble. If the base station receives the RAR message, it will have a time window to respond and to send a random access response ((message2) to the terminal that send the message1. In some examples, the preamble can span 1 sub-frame or even be 2 or 3 sub-frame long. In current systems, the time window for responding starts from the time the preamble is received at the network.
2. If the terminal does not receive the message2 before the window closes, it will generally re-attempt the access procedure (sometimes using power ramping to increase the chances of the message1 being received) but this is outside the scope of the present disclosure.
   It is noteworthy that the terminal can identify that it is the destination of the response message based on the preamble used for the request message. In other words, the selected preamble is used for the terminal to be able to later identify whether the RACH responses are in response to its RACH request message.
   Assuming that the base station sends the response (message2), the connection setup moves on to the next step.
3. An RRC or RRC-like connection procedure. As message2 includes a resources grant for the next message, once the terminal receives message2, it knows which resources to use to setup an RRC connection. The terminal then sends an RRC connection request (message3) and, if the connection setup is successful, the terminal will receive a RRC connection setup message from the base station (message4), and the terminal can confirm to the network that the RRC connection is established, with a RRC connection setup complete message, thereby completing the connection setup to the network.

Although not discussed in the steps above, the terminal will first synchronise with the cell and, once synchronised, will receive the system information transmitted by the base station (e.g. MIB, SIB1, SIB2) so that it can be aware of the resources available for the Physical Random Access Channel (PRACH).

Once the terminal is connected, the network and terminal can communicate information with each other to for example determine that low-latency communications should be used. The network and/or terminal can for example communicate to the other an indication that it has low-latency capabilities and/or that it wishes to use low latency communications.

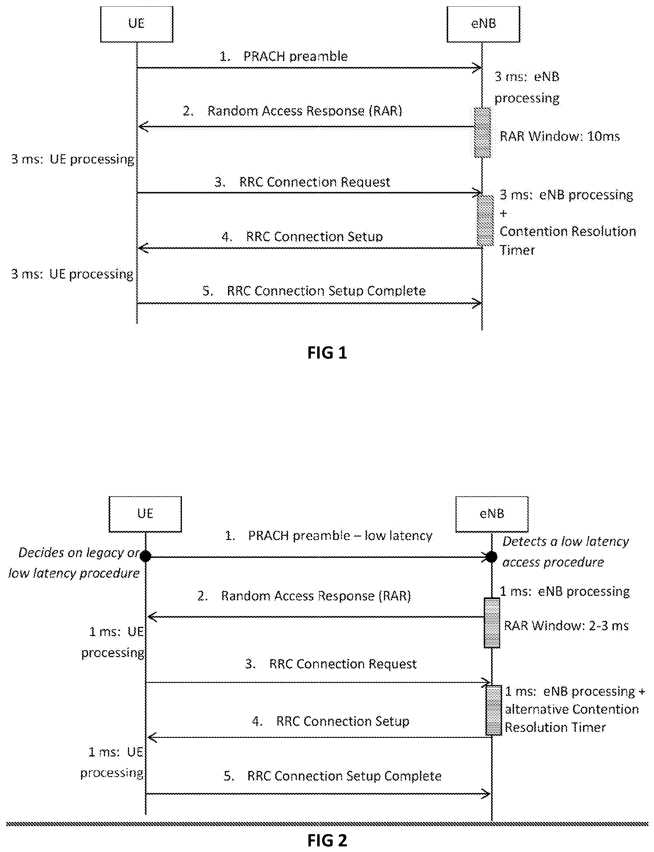

An example of a conventional access procedure including RACH and RRC procedures is illustrated in Figure 1 which represents a current LTE Random Access Procedure.

Now turning to the teachings of the present disclosure, the techniques provided herein can help reducing latency during the initial access procedure (when initiated by the terminal). They can also assist with conveying the terminal's ability to use low latency procedures at a time that can be seen as being as early as technically possible, so that the low latency (e.g. using sTTI techniques) is enabled for the control signalling from the beginning of the procedure for the terminal to connect to the network.

A specific and non-limiting example implementation of the techniques of the present disclosure will now be described. In this example, the network is an LTE network but as will be apparent below, the same teachings can be applied equally to other types of mobile networks.

In general, and in majority of the cases, an inactive device (that is a device that is not currently in a state where it is sending/receiving user or control data) will be in an RRC_IDLE state and with the teachings provided herein, the latency can be reduced when moving from an RRC_IDLE state to an RRC_CONNECTED state. In this example implementation, the latency is reduced from the very first message of the RACH procedure and by identifying a terminal capability and request to use a low latency procedure through the use of a different RACH preamble. The use of such a different preamble can for example indicate a sTTI capability of the terminal and both the RACH and RRC procedures can be carried out with shorter TTI. This is illustrated in Figure 2 which represents a possible new low latency procedure that can for example be used in parallel to a legacy access procedure. The different steps of the example of Figure 2 are discussed below:
Step1: A different RACH message is sent for a low latency procedure compared to a legacy RACH procedure. For example, a different RACH format and/or preamble can be used compared to a legacy (higher latency) procedure.

From RRC_IDLE, when the device needs to access the network and wishes to establish a short TTI-based RRC connection, the device will first make a determination whether it should be using a legacy procedure or a low-latency procedure. This determination can be made based on a number of elements, for example any combination of: a type of traffic to be sent, a type of application or application identifier for an application needing access to the network, a device capability and an indication of the low latency access procedure being available for at least the base station via which the terminal is trying to access the network. Once it is determined to use a low latency procedure, the terminal can inform the network about the terminal's low latency capability (and desire to use the low latency procedure).

As previously mentioned, the RACH procedure and RRC are already standardised in legacy systems. For example, in TS 36.211 [5], 5 formats of RACH preambles are currently standardised (with the first four being the FDD and thus most commonly used, and the fifth format being for TDD). These formats are defined in particular by two parameters, namely T_{CP} which relates to the length of a Cyclic Prefix and to T_{SEQ} which relates to the length of a sequence (length) of the transmission (which can be related to the cell size of the cell the terminal is trying to connect to and to the processing time the eNB.

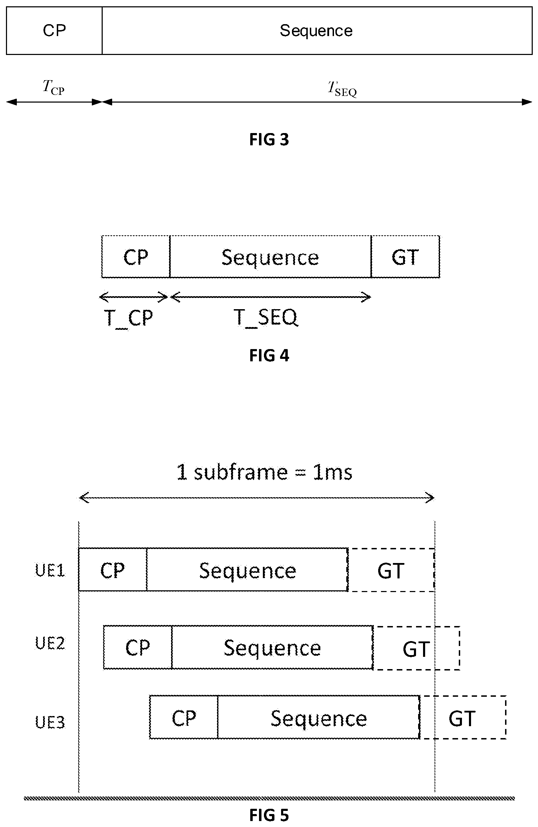

As can be seen from the table below and in Figure 3 (both from [5], see Table 5.7.1-1 and Figure 5.7.1-1, respectively), the difference in terms of T_{CP} and T_{SEQ} would determine the type of RACH.

**Table 1: Random access preamble parameters**

| **Preamble format** | *T*_{CP} | *T*_{SEQ} |
|---|---|---|
| 0 | 3168·*T*ₛ | 24576·*T*ₛ |
| 1 | 21024·*T*ₛ | 24576·*T*ₛ |
| 2 | 6240·*T*ₛ | 2·24576·*T*ₛ |
| 3 | 21024·*T*ₛ | 2.24576·*T*ₛ |
| 4* | 448·*T*ₛ | 4096·*T*ₛ |

For example, WO 2013/047964 [7] discusses aspects related to the above format wherein depending on the length of the RACH preamble, a macro base station or a Remote Radio Head (RRH) to know whether the message is for them. Typically, RACH messages for macro cells are associated with a longer RACH due to the larger cell size. Likewise, RACH messages for small cells are associated with a shorter RACH due to the cell size.

In practice, within a sub-frame, the RACH Duration is a parameter that includes the Guard Time (GT) and that is used to determine the round-trip delay (RTD). This is illustrated in Figures 4 and 5. In particular, Figure 4 illustrates the total duration of T_{CP} + T_{SEQ} + GT while Figure 5 illustrates possible RACH preambles in a sub-frame. In particular, the Guard Time can depend on a cell size, as the timing advance will vary depending on the terminals' position within the cell. With the appropriate guard time, the preamble can arrive within the expected time period (e.g. a sub-frame, a portion of a sub-frame, two or more sub-frames, one or more portions of two or more sub-frames, etc.) even with the longest possible timing advance for the cell size. For example, UE1, UE2 and UE3 of Figure 5 may be sending the RACH preamble from different location within a cell and with the same Guard Time (e.g. depending on the size of the cell). If UE1 is the closest and is near the base station, then the RACH preamble will arrive at the node emitting the cell at the beginning of the sub-frame. If UE2 is further away, the preamble would arrive later within the sub-frame. Finally, if UE3 is the farther and is near the cell edge, the preamble (or preamble portion) would arrive fully within the expected time period, but would end very close to the end of this time period, if not right at the very end.

As briefly mentioned above, FDD LTE system uses Preamble format {0,1,2,3} and TDD LTE uses Preamble format 4. There are also in total 64 preambles available to the terminal and the device usually picks one of the 64 preambles identified by its 'preamble index'. The final preamble to be transmitted will be derived from, amongst other things, the preamble index and the preamble format. In current systems, the total number of preambles is shared between the formats. For example, there are currently about 14-15 preambles to choose from for each of the current preamble format (some of the 64 preambles are not associated with any particular format -see for example Table 5.7.1-2 in [5]). If adding a new format for low latency RACH messages, in a first implementation, it proposed to add additional preambles (and corresponding preamble indexes) for the preambles for the new format. There could be any number of additional preambles deemed suitable and if a similar number of 14 or 15 preambles is elected, there would then be about 80 preambles in total.

In another example, some of the preamble indexes not already associated with a specific format could be used for sending a low latency RACH message (with a format which is shared with higher latency network access messages or with a low latency format, i.e. a format indicating a low latency network access procedure). However, due to the low number of currently RACH preamble indexes not already associated with a format (currently five indexes, namely 30, 46, 60-62), the risk of preamble collision between different (low latency) terminals is higher than when low latency terminals can choose between one of five preamble indexes compared to when more preamble indexes are available for low latency access procedures.

In yet another example, the entire association of the preambles with the formats can be re-arranged so as to distribute the 64 preambles to all formats, legacy ones and low latency ones (as well as keeping some preambles as not associated with any format if deemed appropriate). However, one of the drawbacks of this solution is that the legacy UEs would be affected and might need to be re-configured and/or informed of the now preamble/format association by the network (e.g. via system information). While this implementation can still be useful in some circumstances, it can sometimes be preferred to leave the preamble already associated with a format unaffected so as to reduce the impact on legacy devices.

The corresponding configuration parameters for the RACH are provided to the terminals by the cell using the system information, typically in the SIB2 system information, in RadioResourceConfigCommon. For example, SIB2 currently includes a "prach-Config" field that provides the sequence index. An example of prach-Config is included below:

```
     prach-Config
            rootSequenceIndex 30,
            prach-ConfigInfo
                    prach-ConfigIndex 4,
                    highSpeedFlag FALSE,
                    zeroCorrelationZoneConfig 8,
                    prach-FreqOffset 3
```

In an example of the present disclosure, the low latency RACH is differentiated from a conventional RACH message by the use of a different format (for example a new format #5) for the RACH preamble transmitted by the UE. Accordingly, the UE can setup access to the network under a low latency procedure adjusts its timings accordingly while the base station can readily identify that the procedure is a low latency one rather than a convention one and adjusts its timings accordingly. Such a low latency procedure will hereinafter sometimes be referred to as a short PRACH or sPRACH feature.

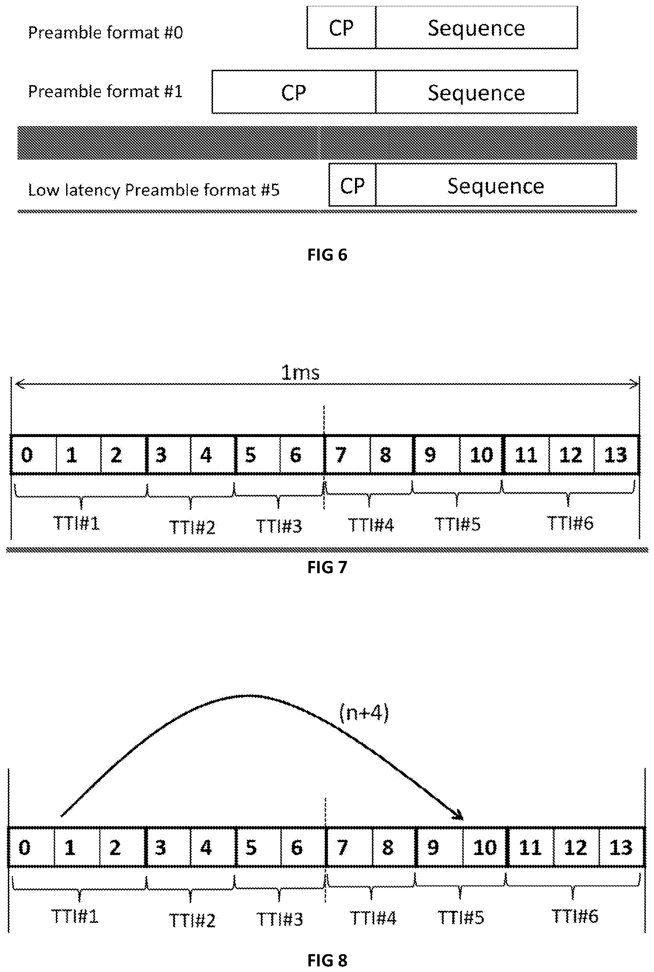

An example new RACH format for sPRACH is illustrated in Figure 6. In this example, the Cyclic Prefix length is shorter than for formats #0 or #1. This is expected to be acceptable as a shorter T_{CP} length is generally considered indicative of better radio conditions and as low latency communications are generally expected to be more suitable to situations where the radio conditions are relatively good (or the communications will suffer from slower transmission times and from more retransmissions). In this case the sequence length T_{SEQ} is longer than the sequence parameter for formats #0 and #1 (and may be selected to be shorter or longer than the sequence length for formats #2 and #3).

Although the sTTI and low latency features can in theory be used in any situation, it is expected that they will be primary used for the high Signal-to-Interference-plus-Noise Ratio (SINR) scenarios and most likely smaller cell-size. Typically, it is expected that the SINR will degrade as the distance from the UE to the eNB increases and a low SINR is likely to result to lower quality communication which may not provide the suitable conditions for low latency communications. Also, with a higher SINR, a smaller CP length can be accommodated as it is not expected that the communications will suffer from multipath and intersymbol interference issues. The T_{SEQ} length can be selected based on what is believed to maximize the number of orthogonal preambles while still fitting in a single sub-frame.

In one example, it is proposed to increase the T_{SEQ} compared to format #0, while lowering the T_{CP} compared to format #0 to give a corresponding cell size of ~7km (which corresponds to about half the cell size of format #0). In other words, the low-latency format suggested below is expected to provide the necessary cell-size information to the network, based on a cell-size of 7km. That is, the preamble length and the corresponding GT length shows what cell size can be handled for serving a cell with an up to 7km cell size.

A suggested value for a low latency RACH format is provided in Table 2 below:

**Table 2**

| | | | | | |
|---|---|---|---|---|---|
| Format 5 | T_CP = 1584 | 0.05ms | T_SEQ = 27744 | 0.9ms | Cell size = 7km |

As the skilled person will understand, this is merely an illustrative example and in other examples, the T_{CP} and T_{SEQ} parameters can each be shorter or longer and can be shorter or longer than any of the corresponding parameters for formats #0-#3. Likewise, the skilled person will appreciate that more than one additional formats may be used. For example, just like format #2-#3 with a longer T_{SEQ} parameter are indicative that the RACH message is for a macro cell (rather than a small cell -see formats #0-#1), the low-latency access procedure could make use of two (or more) formats, with a low latency macro cell format and a low latency small cell format.

The base station could provide within a SIB (e.g. SIB2) the configuration of the new format and/or an indication that it supports the sPRACH feature. In some cases, an indication of the new format can be taken as an indication that the base station supports the new format. The indication of one or more new formats may be provided using any suitable information, such as an index number (e.g. an indication that the base station supports format #5) or one or more configuration parameters (e.g. T_{CP} and/or T_{SEQ}) from which the terminal can derived the supported new format(s). In some cases, the base station may only carry an indication that it supports the sPRACH feature and the terminal can be pre-configured with one or more formats suitable for using this feature.

Once the terminal has indicated that it will use this low latency procedure, the lower latency transmissions could be used for all the signalling messages, in a manner similar to that proposed for the sTTI features.

Step2: Subsequent RACH procedure messages using a low latency procedure, for example using an sTTI or sTTI-like feature.

Owing to the teachings of the present invention, the latency of the access procedure is be reduced from the very beginning, from the first message. On the base station side and upon receipt of the low latency RACH request message, the base station can process the message faster and/or respond to the message quicker (e.g. by reducing the window for sending the response message) compared to the processing time and/or response window for responding to a convention RACH request message.

The current message sequence for LTE and an example message sequence are shown in Figures 1 and 2 above, respectively.

Once the base station is aware of the low latency capability of the terminal via the new RACH preamble format and/or a preamble index selected, the base station can respond with a Random Access Response (RAR, sometimes also referred to as msg2) to provide the uplink grant for the subsequent message3.

In this example, two low latency mechanisms are illustrated for sending msg2. A first mechanism is a reduced processing time for processing the message. In this example, once the base station recognises that the RACH message is a RACH message of the low latency type (e.g. uses the low latency preamble format and/or index), the processing by the base station can be switched to shortened TTI. For example, while the expecting processing time in LTE is about 3ms, under the low latency access procedure, this processing time can be reduced to about 0.6ms to 1ms -corresponding to (n+4) or (n+6) TTI, as illustrated in Figures 7 and 8.

Figure 7 illustrates the short TTI distribution in a 1ms sub-frame, using a 2 or 3 OFDM symbol length per TTI. Figure 8 illustrates a time window of (n+4) for Shortened TTI for the base station to process the RACH message (message 1 or msg1). The duration for the base station processing time is reduced from 3ms to reduced value, for example about 0.6ms or 1ms if defined by units of time or 4 TTls or 6TTIS if defined by number of TTls. It is noteworthy that other time and/or TTI values may be used.

According to a second mechanism, the RAR window can additionally or alternatively be reduced to improve the latency. The current RAR window is relatively large, namely 10 sub-frames (i.e. 10ms) for the base station to receive all the random access requests and before responding back with msg2. By reducing reduce the RAR window size, for example to 3 sub-frames (i.e. 3 ms). Depending on the expected base station's capabilities, the expected terminals' capabilities and/or the expected radio conditions for low latency access procedure use cases, this window could be set to an appropriate value. In the context of LTE, it is expected that 3 ms is likely to be shortest possible value for the RAR window. In other cases, it could be less than 3ms (e.g. with other radio technologies or with a different version of LTE compared to what is used today) or more than 3ms (e.g. with LTE, LITE-like or any other radio technologies). One of the reasons for reducing the RAR window size for this suggested 3ms is to try to ensure that last preamble is completed and to try to the duration of a few sub-frames for the processing and timing advance (TA).

In case where no response is received and the attempt at accessing the network is unsuccessful, the UE can follow any appropriate steps to re-attempt a network access (if appropriate) based on the network access procedures. In most cases, the terminal will be expected to increase its transmit power as per power ramping procedures already in LTE or in other radio technologies. It is noteworthy that although these techniques for re-attempting to access the network can be readily adapted to a system having a low latency procedure according to the present invention, these will also be expected to be lower latency overall. For example, as the processing times and response time will be shorter than with a conventional / higher latency access procedure, the terminal will be able to determine quicker that the attempt was unsuccessful and will thus be able to re-attempt to access the network quicker. All the time savings that can be made with a single access attempt according to a low latency network access procedure can be added up when the terminal has to go through two or more attempts before it can either access the network or determine that the access was unsuccessful.

Step 3: On receipt of RAR, the terminal processing time can also in some examples be reduced in accordance with the present disclosure. For example, based on short TTI periods, it can be set to (n+4) or (n+6) TTls, which corresponds to about 0.6ms to 1ms (see Figures 7 and 8 above).

Accordingly, the terminal can send message3 "RRC_CONNECTION_REQUEST" using 2 or 3 OFDM symbols (if using for example a shortened TTI - sTTI or sTTI-like feature) based on the corresponding UL grant indicated in the RAR.

Step 4: When the base station receives the RRC Connection Request message, it can initiate a Contention Resolution Timer as per the conventional RRC connection setup procedure. However, in accordance with the present disclosure, in some examples the contention resolution timer value can also be reduced so as to reduce the latency. As before the base station processing time can be reduced to for example (n+4) or (n+6) TTI.

And as before, in some examples the message4 can also be send using a 2 or 3 OFDM symbol sTTI.

Accordingly, in the example above, if all the low latency techniques discussed above are implemented, a low latency access procedure can be completed in about 6 ms, compared to about 31 to 36 ms in a conventional LTE access procedure. This significant reduction in signalling establishment can thus further assist in reducing the latency in mobile networks. Table 3 below illustrates a comparison of timings between a conventional LTE procedures and a low latency procedure according to an example implementation of the present disclosure.

**Table 3 - latency comparison**

| **Messages** | **Low latency example values** | **LTE values** |
|---|---|---|
| 1. Msg1- RACH | 1 | 1 |
| 2. RARwindow - preamble detection/processing | 2 | 10 |
| 3. Msg2 - RAR | 0.2 | 1 |
| 4. UE processing | 0.6-1 | 3 |
| 5. Msg3 - RRC Connection Request | 0.2 | 1 |
| 6. eNB processing / contention resolution | 0.6-1 | 3-5 |
| 7. Msg4 - RRC Connection setup | 0.2 | 1 |
| 8. UE processing | 0.6-1 | 3-5 |
| 9. Msg5 - RRC setup complete | 0.2 | 1 |
| Total | 5.6 - 6.8 ms | 24 - 28 ms |

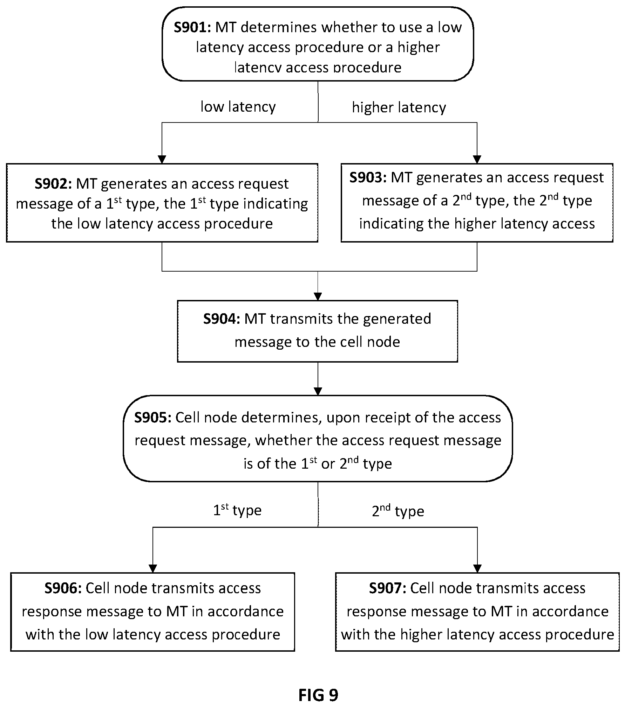

Figure 9 illustrates an example flow chart for providing a low latency access network procedure in accordance with the present disclosure. In particular, in this example considering the entire system, the terminal is operable to communicate very early to the cell node that it is using a low latency procedure and the cell node can then use a different access procedure, with for example lower processing and response times (for the terminal and/or cell node), while still reducing the impact on the legacy terminals, and even in some cases while maintaining the ability to use the legacy procedure for other terminals without any modification to the legacy elements or operations.

First, at S901, the mobile terminal (MT) determines whether to use a low latency access procedure or a higher latency access procedure. For example, the terminal may take into account any combination of one or more of: a low latency capability of the terminal, a low latency capability of the cell node (e.g. communicated as part of system information), radio conditions, a type of data to be sent, a type of application requesting the data transmission, a battery level, etc. If it is determined to use a low latency access procedure, the MT generates at S902 an access request message of a first (low latency) type, the first type indicating the low latency access procedure. On other hand, if it is determined to use a higher latency access procedure (e.g. a legacy one), the MT generates at S903 an access request message of a second (higher latency) type, the second type indicating the higher latency access procedure. The MT can then transmit the generated message to the cell node at S904. Upon receipt of the generated and transmitted access request message, the cell node determines whether the access request message is of the first or second type (S905). If is the cell node determines that the access is of the first (low latency) type, the cell node transmits an access response message to the MT in accordance with the low latency access procedure (S906). For example, the cell node may process the message quicker and/or reduce the response window for sending the access response message (compared to the higher latency procedure, such as a legacy one in LTE). On the other hand, if the cell node determines that the message is of the second (higher latency) type, the method moves to S907 instead, where the cell node transmits an access response message to the MT in accordance with the higher latency access procedure. For example, and relative to the low(er) latency procedure, the cell node can have a longer processing time allocated for processing the message and can have a longer time window for responding to the message.

Although Figure 9 and the corresponding method discusses the first message only, it is noteworthy that the teachings of the present invention can apply to the overall procedure rather than to the first messages only. For example, in some cases the first few message may not provide the majority of the latency improvements while later messages (e.g. processing times and response times and/or time windows) can provide the bulk of the time savings. Although the skilled person will appreciate that reducing the processing time and/or response time for the cell node to respond to the first access message from the mobile terminal can be beneficial when trying to improve (reduce) the latency, in other examples in accordance with the present disclosure, this may not be provided. For example, if other improvements (such as time reductions) are provided in respect of other messages or message processing steps in the access procedures (e.g. for any other RACH and/or RRC messages in the case of LTE), the resulting arrangement would still be expected to help reducing latency. So long as the terminal and cell node are operable to use either of a lower and higher latency procedures, with the lower latency procedure providing a faster attachment to the network so that the terminal can access the network, then the latency of the overall system is expected to be improved.

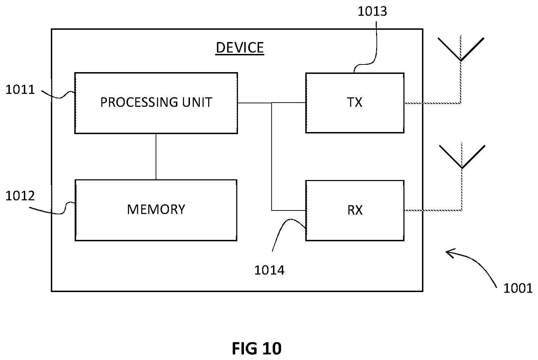

Figure 10 illustrate an example device for use in a mobile telecommunications network. For example, the structure of Figure 10 may be applied to a cell node and/or to a terminal of the present disclosure. More specifically the device 1001 may include at least one processing unit 1011, such as CPU, a GPU, etc.; a memory 1012 which be any combination of a volatile and non-volatile/persistent memory. For example, the memory 1012 may be used to store any data such as an operating system, software (which may for example be executed by the processing unit), configuration information for the device, session information, configuration information for any other node, etc. At least the processing unit 1011 is connected to a transmitter 1013 and a receiver 1014. While in the example of Figure 10 the transmitter 1013 and receiver 1014 have been represented as two separate elements, in other cases, they may be provided and/or represented as a single transceiver, and in other case more than one transmitter, receiver and/or transceiver may be provided. Also, the skilled person will appreciate that Figure 10 is a schematic representation of a device and that the actual implementation of a device may include more/fewer elements while the connections between the different elements may differ, e.g. depending on the implementation choices for the device. It may for example be decided that the processing unit 1011 may be connected to the transmitter 1013 and/or receiver 1014 via a radio manager or any other suitable. For example, the radio manager may be configured to process data for transmission, received from higher layers (e.g. from an application, an IP layer, etc.), to generate messages that can be transmitted wirelessly in accordance with a mobile communications protocol. Likewise, it may be configured to process messages received over the air to pass information/data to higher layer as appropriate.

According to one aspect of the disclosure present disclosure, latency reduction can be used for devices that are not already in the RRC_CONNECTED devices. As the majority of the devices are in RRC_IDLE, reducing the latency of the access procedure is an attractive approach for latency reduction.

Additionally, it is noteworthy that a grant-free solution or a Semi Persistent Scheduling (SPS) require dedicated resources to be allocated by the network when it is not easily to predict the Transport Block Size (TBS) to be sent. Whereas the presented invention establishes an RRC connection and the network then fully and optimally utilises the resources allocated. With the techniques discussed herein, latency reduction as well as resource optimisation can be assisted.

Moreover, the present disclosure can also help improve power consumption. Typically, the power consumption during the initial network access establishment can be reduced which, in turn, will extend the device's battery life. In particular, in cases where a terminal usually sends only small amounts of data, there could be a significant improvement on battery life as in this case the amount and/or time of signalling used to establish the connection might be significant compared to the amount and/or time of data to be sent.

In the example above, the latency reduction has been achieved through the use of computing time reducing features and response time reducing features but it will be appreciated that in other examples, only one of these types of features may be implemented. For example, in some cases, only the one or more computing time parameters may be reduced while in other cases, only the one or more response time parameters may be reduced.

Also, the above example is mainly directed at using a new low latency format for the preamble of the low latency type. However, in other examples, the techniques herein may involve any combination of the use of a low latency format and of a selection of a preamble (index) from a set of low latency preambles. For example, in some cases, the terminal will select a preamble from a set of low latency preambles that is separate from (i.e. that does not overlap with) a set of higher latency preambles. Depending on the type of information that can be communicated by the network to the terminal prior to the start of the access procedure (e.g. with the MIB, SIB1 and/or SIB2), the impact on legacy access procedures may more limited with the introduction of a new format (which the legacy terminals may not be aware of but would not need to use in any case) compared to the allocation of existing preambles/preamble indexes (for existing formats) to low latency access procedure. Also, while the introduction of one low latency format has been discussed herein, it will be appreciated that two or more formats may be used to signal that the terminal is using a low latency procedure and to therefore change the operating mode of the cell node for the access procedure. For example, there could one format for low latency in a small cell and one for low latency in a macro cell.

It is noteworthy that in the present disclosure, the mobile has generally been referred to as a terminal, but it can also as a radio device, a User Equipment (UE), a communications device, etc. The teachings in respect of the terminal apply equally to any type of device that wishes to connect to a mobile network and that will use an access procedure (such as a RACH and RRC procedure in LTE).

Likewise, the description has generally been presented discussing a base station but the skilled person will appreciate that the same teachings apply to any type of node in a mobile network that can radiate its own cell to provide mobile terminals access to the network. In some examples, these will be a conventional base station (e.g. BTS, eNB, NR/5G base stations, etc.), a relay node radiating its own cell, a small cell base station, a mobile terminal also acting as a base station so that other terminals can access the network through it. Any of these elements can also be referred to as a cell node.

The skilled person will appreciate that, while the present disclosure has been generally presented in the context of LTE, it is not limited to an LTE system. At present, the same problems are not expected to occur with a 5G network for example, as the access procedure is already a low latency one compared to an LTE one for example. However, as the skilled person will understand, there may be later be a need to have a higher latency procedure that does not interfere with (and that limits the impact on) the current low-latency 5G network access procedure. For example, some devices machine type communications may have limited processing capabilities and it may be that the low latency 5G access procedure will be deemed too greedy in computing resources for these devices. In such cases, a higher latency procedure can be introduced in parallel to the existing low latency one so as to cater to the different needs of different types of devices. Accordingly, the present techniques can be applied to any suitable mobile network technology.

It will also be noted that in the present disclosure, the expressions short TTI, shortened TTI, shorter TTI or sTTI have been used interchangeably.

According to the present disclosure, it has therefore been provided an arrangement which enables the use of at least two co-existing access procedures, namely a low latency access procedure or a higher latency access procedure. The low latency procedure is a latency procedure which can be completed within a shorter timeframe than a higher latency procedure. Accordingly, while other systems can sometimes provide an access procedure which give can lead to low latency communications once the terminal has completed the access procedure and/or is connected, the access procedure itself can generally not be completed within a shorter timeframe. Accordingly, with techniques of the present disclosure, the low latency capabilities of the network can be enhanced by reducing the latency of the access procedure itself. The shorter timeframe in the lower latency procedure can be provided using one or more of the techniques discussed above. Network elements (e.g. a terminal, base station, etc.) are configured to have a shorter processing time and/or shorter windows for sending messages or listening to messages of the access procedure.

Also, while the method steps have generally been presented in a specific order, the present disclosure encompasses a method where any of the method steps are carried in a different order and/or in parallel to one or more other steps, so as long as it is technically feasible. Additionally, any aspect discussed from the perspective of an element being operable to do an action also discloses the same feature from the perspective of the method of doing the action. And likewise, any discussion presented from the perspective of a method step also discloses the same features from the perspective of any one or more suitable elements being operable to carry out some or all of the method step. It is also considered within the present disclosure that for any method step(s), there can be a computer program configured to carry out, when executed, the method step(s). Also, a device, such as a terminal or a cell node, is generally considered from a logical perspective, as the element carrying out the appropriate function. Therefore, any such device may be implement using one or more physical elements as deemed appropriate. For example, it may be implemented in one (or more) of: a standalone physical device, in two or more separate physical devices, in a distributed system, in a virtual environment using any suitable hardware or hardware combination, etc. Likewise, for any disclosure of a device configured or operable to carry out a function, it is also hereby considered as disclosed any circuitry (comprising for example a transmitter and/or received, as appropriate), which is configured to carry out, when in use, the same function. Furthermore, any device or functional element described herein may include, if appropriate, fewer or additional functions or elements. For example, and as mentioned above, base stations may generally have the structure illustrated in Figure 10 but in some cases it may also include additional element such as a scheduler, a radio manager (e.g. to manage different antennas and/or sectors), etc. as appropriate. In another example, a device having the structure generally represented in figure 10 may also include any of: a SIM, a SIM manager, an operating system, etc. as appropriate.

Moreover, whenever a message is being mentioned, it will be appreciated that the message may sometimes be sent as a single message and sometimes as two or more messages. For example, a preamble may be sent over two sub-frames which can be viewed as sending at least two portions, with at least one portion in each sub-frame. Also, depending on the level considered, a single message at one level may correspond to two or more messages at a different level. For example, a single higher layer message may be sent as two lower layer message or two higher layer messages may be sent together in a single lower layer message.

In one implementation, when the teachings of the present invention are applied to an LTE arrangement, there can be been provided a new RACH preamble Format which could be used to try to reduce latency and processing delay for an initial access to the network.

There will now been discussed a non-limiting example implementation in accordance with some of the teachings and techniques of the present disclosure with proposal on how the current LTE system could potentially be modified to allow for a low latency access procedure, according to one example. This example provides an example configuration for the terminal and cell node (e.g. base station) to use a specific example low latency procedure:
Informing UE capability at the earliest possible stage (e.g. RACH)
When the device with low latency capability is accessing the network and wanting to establish short TTI-based RRC connection, the device should inform the network about the UE capability. It is desirable if the network is aware of the UE's capability at the earliest stage of the RRC procedure as it would provide knowledge for managing system's capacity and resources appropriately and allow reducing the latency from the step 1. One of the potential method is to introduce a new format of RACH preamble. The new preamble formats may include new T_CP and T_SEQ parameters.
**Proposal 1:** A method to inform the UE's low latency capability at the earliest stage of RRC procedure. Introduce a new format of RACH preamble.
Broadcast Information on new configuration in SIB2
If a new format or PRACH access mechanism is introduced, corresponding configuration information about the new PRACH access mechanism is provided in system information block 2 (SIB2).
**Proposal 2:** For a new PRACH access mechanism, such as RACH preamble format and other relevant parameters the configuration information is given in SIB2.
Random Access Response and RAR Window
On the receipt of new PRACH access mechanism and the UE capability, the eNB processing can be switched to shortened TTI, either (n+4) or (n+6) where the TTI length is 2/3 OS. Figures 7 and 8 illustrate the usage of (n+4) processing time with sTTI.
With the proposals above we can substantially reduce the processing time (N+4) and transmission time for all the messages to 2/3OS. In addition to reducing the eNB processing time and transmission latency, the RAR window can also be configured to the lowest possible value, in the order of 2 or 3ms. The reason for suggesting the lowest RAR window value is to minimize any potential delay due to configured long RAR window.
**Proposal 3.1:** For the new RACH format, it is proposed to change subsequent RRC procedure the processing time to N+4 where N is sTTI of 2/3 OS
**Proposal 3.2:** On receipt of low latency capable UE's RACH, network should aim to configure RAR window to the lowest possible value e.g. 2 ms
Msg3 RRC Connection Request
Based on the UL grant details in the RAR, the UE may be able granted access if subsequent messages will follow sTTI or regular LTE timing configurations. If UL grant is based on sTTI, the msg3 RRC Connection Request as the first PUSCH message based on shortened TTI (2/3 OS).
**Proposal 4:** Based on UL grant, RRC Connection Request is based shortened TTI.
Msg4 and Contention Resolution
The contention Resolution Timer is broadcasted in SIB2. When the eNB receives RRC Connection Request, it initiates Contention Resolution Timer. It is proposed to reduce the contention resolution timer values for UEs using new preamble format and also send the msg 4 using 2/3 OFDM symbols.
**Proposal 5:** It is proposed to reduce the contention resolution timer and send the message 4 using 2/3 OFDM symbols
Potential reduction in CP latency
If the changes above are considered, then the following reduction for the CP latency could be reached The numbers above are numbers for discussion and as a conclusion it is proposed to update corresponding specifications (e.g. 36.331) -see for example Table 3 above.
Conclusions
In this contribution, we presented our views on control plane latency reduction.
**Proposal 1:** A method to inform the UE's low latency capability at the earliest stage of RRC procedure. Introduce a new format of RACH preamble and write a LS to RAN1 to work out the details.
**Proposal 2:** For a new PRACH access mechanism, such as RACH preamble format (if introduced), the configuration information is given in SIB2.
**Proposal 3.1:** For the new RACH format, it is proposed to change subsequent RRC procedure the processing time to N+4 where N is sTTI of 2/3 OS
**Proposal 3.2:** On receipt of low latency capable UE's RACH, network should aim to configure RAR window to the lowest possible value e.g. [2] ms
**Proposal 4:** Based on UL grant, RRC Connection Request can be based on shortened TTI.
**Proposal 5:** It is proposed to reduce the contention resolution timer and send the message 4 using 2/3 OFDM symbols

While this particular example is expected to provide a relatively good balance of time savings while being realistic. Amongst other things, if the time parameters are reduced too much relative to the terminal's or cell node's processing capabilities for example, the procedure would be so latency that the devices might not be able to keep up and it would result in the access procedure failing, thereby causing more delay rather than saving time as expected. However, the skilled person will appreciate that this example is not the only possible configuration or implementation in accordance with the teachings provided herein.

### References

[1] RP-171468, "Revised WID: Shortened TTI and processing time for LTE", Ericsson, June 2017.
[2] RP-160667, "L2 Latency Reduction Techniques for LTE", Ericsson, March 2016
[3] WO 2016/053844, "Downlink and uplink channel with low latency", 7 April 2016
[4] EP 2077694, "Apparatus and method for transmitting and receiving enhanced RACH in a mobile communication system", 8 July 2009
[5] 3GPP TS 36.211 "3rd Generation Partnership Project; Technical Specification Group Radio Access Network; Evolved Universal Terrestrial Radio Access (E-UTRA); Physical channels and modulation (Release 14)" V14.4.0 (September 2017)
[6] WO 2017/151187, "Low latency PRACH design in unlicensed spectrum", 8 September 2017
[7] WO 2013/047964, "Enhanced random access to a heterogeneous network", 4 April 2013

## Claims

1. A method of operating a mobile terminal in a telecommunications network, the mobile terminal being operable to communicate with a cell node of the telecommunications network, the method comprising the mobile terminal:
determining (S901) whether to use a low latency access procedure or a higher latency access procedure;
if it is determined to use the low latency access procedure, generating (S902) an access request message of a low latency type, wherein the low latency type of access request message indicates that the mobile terminal is using the low latency access procedure;
if it is determined to use the higher latency access procedure, generating (S903) an access request message of a higher latency type, wherein the higher latency type of access message indicates that the mobile terminal is using the higher latency access procedure;
transmitting (S904) the generated access request message to the cell node; and
upon determining to use a low latency access procedure, at least one of:
setting a shorter time window for listening for an access response message from the cell node compared to the time window for listening for an access response sent by the cell node in response to an access request message of the higher latency type; and
setting at least one processing time window to a shorter value compared to the value for the corresponding at least one processing time window for the higher latency access procedure, wherein the processing time window provides a time window, from the receipt of a message from the cell node, for the mobile terminal to process the received message, generate a subsequent message in accordance with the corresponding access procedure and transmit the generated subsequent message to the cell node,
wherein the higher latency access procedure and the low latency access procedure comprise message sequences comprising the same number of messages.

2. The method of any preceding claim, wherein generating (S902; S903) an access request message comprises selecting one of a preamble format for low latency access request messages and a preamble format for higher latency access request messages and generating an access request message based on the selected format, wherein a preamble format is defined by at least one of a sequence time and a cyclic prefix time for the access request message.

3. The method of any preceding claim, wherein generating (S902; S903) an access request message comprises selecting a preamble for the access request message, wherein the preamble is selected from a first set of preambles for generating an access request message of the low latency type; and wherein the preamble is selected from a separate set of preambles for generating an access request message of the higher latency type.

4. The method of any preceding claim wherein the determining (S901) is based on one or more of: a low latency capability indication transmitted by the cell node and on a mobile terminal configuration.

5. A method of operating a cell node of a telecommunications network, the cell node being operable to communicate with a mobile terminal, the method comprising the cell node:
receiving an access request message from the mobile terminal;
determining (S905) whether the access request message is of a low latency type or of a higher latency type, wherein the low latency type of access request message indicates that the mobile terminal is using a low latency access procedure and wherein the higher latency type of access request message indicates that the mobile terminal is using a higher latency access procedure;
if it is determined that the access request is of the low latency type, transmitting (S906) an access response message to the mobile terminal in accordance with the low latency access procedure;
if it is determined that the access request is of the higher latency type, transmitting (S907) an access response message to the mobile terminal in accordance with the higher latency access procedure,
upon determining that the access request message is of the low latency type, at least one of:
setting a shorter time window for transmitting an access response message compared to the time window for transmitting an access response in response to an access request message of the higher latency type; and
setting at least one processing time window to a shorter value compared to the value for the corresponding at least one processing time window for the higher latency access procedure, wherein the processing time window provides a time window, from the receipt of a message from the mobile terminal, for the cell node to process the received message, generate a subsequent message in accordance with the corresponding access procedure and transmit the generated subsequent message to the mobile terminal,
wherein the higher latency access procedure and the low latency access procedure comprise message sequences comprising the same number of messages.

6. The method of claim 5 comprising the cell node transmitting a low latency capability indication indicating that the cell node supports the low latency and/or higher latency access procedures.

7. The method of any of claims 5 to 6 wherein the determining (S905) comprises:
identifying one of a low latency preamble format and a higher latency preamble format being used in the received access request message, wherein a preamble format is defined by at least one of a sequence time and a cyclic prefix time for the access request message; and determining whether the access request message is of a low latency type or of a higher latency type based the preamble format identified for the received access request message.

8. The method of any of claims 5 to 7 wherein the determining (S905) comprises:
upon identifying a preamble for the access request message as being from a first set of preambles used for generating an access request message of the low latency type, determining that the access request message is of the low latency type; and upon identifying a preamble for the access request message as being from a separate set of preambles used for generating an access request message of the higher latency type, determining that the access request message is of the higher latency type.

9. The method of any preceding claim wherein the low latency and higher latency access procedures are each associated with a low latency and a higher latency response time, respectively, for the cell node to respond to the access request message from the mobile terminal, the low latency response time being shorter than the other response time,
wherein optionally a response time is one of a time window, a time slot or a timer for the cell node to transmit an access response message to the mobile terminal.

10. The method of any preceding claim, wherein the low latency access procedure is configured to complete in a shorter time than the higher latency access procedure.

11. A method in a telecommunications network, the telecommunications network comprising a cell node being operable to communicate with a mobile terminal, the method comprising:
the mobile terminal determining (S901) whether to use a low latency access procedure or a higher latency access procedure;
if it is determined to use the low latency access procedure, the mobile terminal generating (S902) an access request message of a first type, wherein the first type of access request message indicates that the mobile terminal is using the low latency access procedure;
if it is determined to use the higher latency access procedure, the mobile terminal generating (S903) an access request message of a second type, wherein the second type of access message indicates that the mobile terminal is using the higher latency access procedure; and
the mobile terminal transmitting (S904) the generated access request message to the cell node;
upon determining to use a low latency access procedure, at least one of:
the mobile terminal setting a shorter time window for listening for an access response message from the cell node compared to the time window for listening for an access response sent by the cell node in response to an access request message of the higher latency type; and
the mobile terminal setting at least one processing time window to a shorter value compared to the value for the corresponding at least one processing time window for the higher latency access procedure, wherein the processing time window provides a time window, from the receipt of a message from the cell node, for the mobile terminal to process the received message, generate a subsequent message in accordance with the corresponding access procedure and transmit the generated subsequent message to the cell node,
upon receipt of the access request message, the cell node determining (S905) whether the access request message is of the first type or of the second type;
if it is determined that the access request is of the first type, transmitting (S906) an access response message to the mobile terminal in accordance with the low latency access procedure; and
if it is determined that the access request is of the second type, transmitting (S907) an access response message to the mobile terminal in accordance with the higher latency access procedure,
upon determining that the access request message is of the low latency type, at least one of:
the cell node setting a shorter time window for transmitting an access response message compared to the time window for transmitting an access response in response to an access request message of the higher latency type; and
the cell node setting at least one processing time window to a shorter value compared to the value for the corresponding at least one processing time window for the higher latency access procedure, wherein the processing time window provides a time window, from the receipt of a message from the mobile terminal, for the cell node to process the received message, generate a subsequent message in accordance with the corresponding access procedure and transmit the generated subsequent message to the mobile terminal,
wherein the higher latency access procedure and the low latency access procedure comprise message sequences comprising the same number of messages.

12. A mobile terminal for use in a telecommunications network, the mobile terminal being operable to communicate with a cell node of the telecommunications network, the mobile terminal being further configured to:
determine (S901) whether to use a low latency access procedure or a higher latency access procedure;
generate (S902), if it is determined to use the low latency access procedure, an access request message of a first type, wherein the first type of access request message indicates that the mobile terminal is using the low latency access procedure;
generate (S903), if it is determined to use the higher latency access procedure, an access request message of a second type, wherein the second type of access message indicates that the mobile terminal is using the higher latency access procedure;
transmit (S904) the generated access request message to the cell node; and
upon determining to use a low latency access procedure, at least one of:
set a shorter time window for listening for an access response message from the cell node compared to the time window for listening for an access response sent by the cell node in response to an access request message of the higher latency type; and
set at least one processing time window to a shorter value compared to the value for the corresponding at least one processing time window for the higher latency access procedure, wherein the processing time window provides a time window, from the receipt of a message from the cell node, for the mobile terminal to process the received message, generate a subsequent message in accordance with the corresponding access procedure and transmit the generated subsequent message to the cell node,
wherein the higher latency access procedure and the low latency access procedure comprise message sequences comprising the same number of messages.

13. A cell node for use a telecommunications network, the cell node being operable to communicate with a mobile terminal, the cell node being further operable to:
receive an access request message from the mobile terminal;
determine (S905) whether the access request message is of a first type or of a second type, wherein the first type of access request message indicates that the mobile terminal is using a low latency access procedure and wherein the second type of access request message indicates that the mobile terminal is using a higher latency access procedure;
transmit (S906), if it is determined that the access request is of the first type, an access response message to the mobile terminal in accordance with the low latency access procedure;
transmit (S907), if it is determined that the access request is of the second type, an access response message to the mobile terminal in accordance with the higher latency access procedure; and
upon determining that the access request message is of the low latency type, at least one of:
set a shorter time window for transmitting an access response message compared to the time window for transmitting an access response in response to an access request message of the higher latency type; and
set at least one processing time window to a shorter value compared to the value for the corresponding at least one processing time window for the higher latency access procedure, wherein the processing time window provides a time window, from the receipt of a message from the mobile terminal, for the cell node to process the received message, generate a subsequent message in accordance with the corresponding access procedure and transmit the generated subsequent message to the mobile terminal,
wherein the higher latency access procedure and the low latency access procedure comprise message sequences comprising the same number of messages.

14. A telecommunications network, the telecommunications network comprising a cell node being operable to communicate with a mobile terminal, wherein:
wherein the mobile terminal is operable to:
determine (S901) whether to use a low latency access procedure or a higher latency access procedure;
generate (S902), if it is determined to use the low latency access procedure, an access request message of a first type, wherein the first type of access request message indicates that the mobile terminal is using the low latency access procedure;
generate (S903), if it is determined to use the higher latency access procedure, an access request message of a second type, wherein the second type of access message indicates that the mobile terminal is using the higher latency access procedure;
transmit (S904) the generated access request message to the cell node; and
upon determining to use a low latency access procedure, at least one of:
set a shorter time window for listening for an access response message from the cell node compared to the time window for listening for an access response sent by the cell node in response to an access request message of the higher latency type; and
set at least one processing time window to a shorter value compared to the value for the corresponding at least one processing time window for the higher latency access procedure, wherein the processing time window provides a time window, from the receipt of a message from the cell node, for the mobile terminal to process the received message, generate a subsequent message in accordance with the corresponding access procedure and transmit the generated subsequent message to the cell node,
wherein the cell node is operable to:
determine (S905), upon receipt of the access request message, whether the access request message is of the first type or of the second type;
transmit (S906), if it is determined that the access request is of the first type, an access response message to the mobile terminal in accordance with the low latency access procedure;
transmit (S907), if it is determined that the access request is of the second type, an access response message to the mobile terminal in accordance with the higher latency access procedure; and
upon determining to use a low latency access procedure, at least one of:
set a shorter time window for listening for an access response message from the cell node compared to the time window for listening for an access response sent by the cell node in response to an access request message of the higher latency type, and
set at least one processing time window to a shorter value compared to the value for the corresponding at least one processing time window for the higher latency access procedure, wherein the processing time window provides a time window, from the receipt of a message from the cell node, for the mobile terminal to process the received message, generate a subsequent message in accordance with the corresponding access procedure and transmit the generated subsequent message to the cell node,
wherein the higher latency access procedure and the low latency access procedure comprise message sequences comprising the same number of messages.

15. A computer program comprising instructions for carrying out the method of any of claims 1 to 10, when executed.

## Patentansprüche

1. Verfahren zum Betreiben eines mobilen Endgeräts in einem Telekommunikationsnetz, wobei das mobile Endgerät zum Kommunizieren mit einem Zellknoten des Telekommunikationsnetzes betreibbar ist, wobei das Verfahren umfasst, durch das mobile Endgerät:
Bestimmen (S901), ob ein Zugriffsverfahren mit niedriger Latenz oder ein Zugriffsverfahren mit höherer Latenz verwendet werden soll;
wenn bestimmt wird, dass das Zugriffsverfahren mit niedriger Latenz verwendet werden soll, Generieren (S902) einer Zugriffsanfragenachricht eines Typs für niedrige Latenz, wobei der Typ für niedrige Latenz der Zugriffsanfragenachricht angibt, dass das mobile Endgerät das Zugriffsverfahren mit niedriger Latenz verwendet;
wenn bestimmt wird, dass das Zugriffsverfahren mit höherer Latenz verwendet werden soll, Generieren (S903) einer Zugriffsanfragenachricht eines Typs für höhere Latenz, wobei der Typ für höhere Latenz der Zugriffsnachricht angibt, dass das mobile Endgerät das Zugriffsverfahren mit höherer Latenz verwendet;
Übertragen (S904) der generierten Zugriffsanfragenachricht an den Zellknoten; und
wenn bestimmt wird, dass ein Zugriffsverfahren mit niedriger Latenz verwendet werden soll, mindestens eines von:
Festlegen eines kürzeren Zeitfensters zum Überwachen auf eine Zugriffsantwortnachricht von dem Zellknoten im Vergleich zu dem Zeitfenster zum Überwachen auf eine Zugriffsantwort, die vom Zellknoten als Antwort auf eine Zugriffsanfragenachricht des Typs für höhere Latenz gesendet wurde; und
Festlegen mindestens eines Verarbeitungszeitfensters auf einen kürzeren Wert im Vergleich zu dem Wert für das entsprechende mindestens eine Verarbeitungszeitfenster für das Zugriffsverfahren mit höherer Latenz, wobei das Verarbeitungszeitfenster ein Zeitfenster ab dem Empfang einer Nachricht von dem Zellknoten angibt, in dem das mobile Endgerät die empfangene Nachricht verarbeitet, eine nachfolgende Nachricht gemäß dem entsprechenden Zugriffsverfahren generiert und die generierte nachfolgende Nachricht an den Zellknoten überträgt,
wobei das Zugriffsverfahren mit höherer Latenz und das Zugriffsverfahren mit niedriger Latenz Nachrichtenabfolgen umfassen, die dieselbe Anzahl an Nachrichten umfassen.

2. Verfahren nach einem vorstehenden Anspruch, wobei das Generieren (S902; S903) einer Zugriffsanfragenachricht umfasst, dass ein Präambelformat für Zugriffsanfragenachrichten mit niedriger Latenz oder ein Präambelformat für Zugriffsanfragenachrichten mit höherer Latenz ausgewählt wird und eine Zugriffsanfragenachricht auf Basis des ausgewählten Formats generiert wird, wobei ein Präambelformat durch mindestens eine Abfolgezeit und/oder eine zyklische Präfixzeit für die Zugriffsanfragenachricht definiert wird.

3. Verfahren nach einem vorstehenden Anspruch, wobei das Generieren (S902; S903) einer Zugriffsanfragenachricht umfasst, dass eine Präambel für die Zugriffsanfragenachricht ausgewählt wird, wobei die Präambel aus einem ersten Satz von Präambeln zum Generieren einer Zugriffsanfragenachricht des Typs für niedrige Latenz ausgewählt wird; und wobei die Präambel aus einem separaten Satz von Präambeln zum Generieren einer Zugriffsanfragenachricht des Typs für höhere Latenz ausgewählt wird.

4. Verfahren nach einem vorstehenden Anspruch, wobei das Bestimmen (S901) basiert auf: einer Angabe einer Kapazität für niedrige Latenz, die vom Zellknoten übertragen wird, und/oder einer Konfiguration eines mobilen Endgeräts.

5. Verfahren zum Betreiben eines Zellknotens eines Telekommunikationsnetzes, wobei der Zellknoten zum Kommunizieren mit einem mobilen Endgerät betreibbar ist, wobei das Verfahren umfasst, durch den Zellknoten:
Empfangen einer Zugriffsanfragenachricht von dem mobilen Endgerät;
Bestimmen (S905), ob die Zugriffsanfragenachricht einen Typ für niedrige Latenz oder einen Typ für höhere Latenz aufweist, wobei der Typ für niedrige Latenz der Zugriffsanfragenachricht angibt, dass das mobile Endgerät ein Zugriffsverfahren mit niedriger Latenz verwendet, und wobei der Typ für höhere Latenz der Zugriffsanfragenachricht angibt, dass das mobile Endgerät ein Zugriffsverfahren mit höherer Latenz verwendet;
wenn bestimmt wird, dass die Zugriffsanfrage vom Typ für niedrige Latenz ist, Übertragen (S906) einer Zugriffsantwortnachricht an das mobile Endgerät entsprechend dem Zugriffsverfahren mit niedriger Latenz;
wenn bestimmt wird, dass die Zugriffsanfrage vom Typ für höhere Latenz ist, Übertragen (S907) einer Zugriffsantwortnachricht an das mobile Endgerät entsprechend dem Zugriffsverfahren mit höherer Latenz,
wenn bestimmt wird, dass die Zugriffsanfragenachricht vom Typ für niedrige Latenz ist, mindestens eines von:
Festlegen eines kürzeren Zeitfensters zum Übertragen einer Zugriffsantwortnachricht im Vergleich zu dem Zeitfenster zum Übertragen einer Zugriffsantwort als Antwort auf eine Zugriffsanfragenachricht des Typs für höhere Latenz; und
Festlegen mindestens eines Verarbeitungszeitfensters auf einen kürzeren Wert im Vergleich zu dem Wert für das entsprechende mindestens eine Verarbeitungszeitfenster für das Zugriffsverfahren mit höherer Latenz, wobei das Verarbeitungszeitfenster ein Zeitfenster ab dem Empfang einer Nachricht von dem mobilen Endgerät angibt, in dem der Zellknoten die empfangene Nachricht verarbeitet, eine nachfolgende Nachricht gemäß dem entsprechenden Zugriffsverfahren generiert und die generierte nachfolgende Nachricht an das mobile Endgerät überträgt,
wobei das Zugriffsverfahren mit höherer Latenz und das Zugriffsverfahren mit niedriger Latenz Nachrichtenabfolgen umfassen, die dieselbe Anzahl an Nachrichten umfassen.

6. Verfahren nach Anspruch 5, umfassend das Übertragen, durch den Zellknoten, einer Angabe einer Kapazität für niedrige Latenz, die angibt, dass der Zellknoten die Zugriffsverfahren für niedrige Latenz und/oder höhere Latenz unterstützt.

7. Verfahren nach einem der Ansprüche 5 bis 6, wobei das Bestimmen (S905) umfasst:
Identifizieren eines Präambelformats für niedrige Latenz oder eines Präambelformats für höhere Latenz, das in der empfangenen Zugriffsanfragenachricht verwendet wird, wobei ein Präambelformat durch mindestens eine Abfolgezeit und/oder eine zyklische Präfixzeit für die Zugriffsanfragenachricht definiert wird; und Bestimmen, ob die Zugriffsanfragenachricht einen Typ für niedrige Latenz oder einen Typ für höhere Latenz aufweist, basierend auf dem Präambelformat, das für die empfangene Zugriffsanfragenachricht identifiziert wurde.

8. Verfahren nach einem der Ansprüche 5 bis 7, wobei das Bestimmen (S905) umfasst:
wenn identifiziert wird, dass eine Präambel für die Zugriffsanfragenachricht aus einem ersten Satz von Präambeln zum Generieren einer Zugriffsanfragenachricht des Typs für niedrige Latenz stammt, Bestimmen, dass die Zugriffsanfragenachricht vom Typ für niedrige Latenz ist; und wenn identifiziert wird, dass eine Präambel für die Zugriffsanfragenachricht aus einem separaten Satz von Präambeln zum Generieren einer Zugriffsanfragenachricht des Typs für höhere Latenz stammt, Bestimmen, dass die Zugriffsanfragenachricht vom Typ für höhere Latenz ist.

9. Verfahren nach einem vorstehenden Anspruch, wobei die Zugriffsverfahren mit niedriger Latenz und mit höherer Latenz jeweils mit einer Antwortzeit bei niedriger Latenz und bei höherer Latenz verknüpft sind, in der der Zellknoten auf die Zugriffsanfragenachricht von dem mobilen Endgerät antwortet, wobei die Antwortzeit bei niedriger Latenz kürzer ist als die andere Antwortzeit,
wobei die Antwortzeit optional ein Zeitfenster, ein Zeitrahmen oder ein Zeitmesser ist, in dem der Zellknoten eine Zugriffsantwortnachricht an das mobile Endgerät überträgt.

10. Verfahren nach einem vorstehenden Anspruch, wobei das Zugriffsverfahren mit niedriger Latenz so konfiguriert ist, dass es in einer kürzeren Zeit abgeschlossen wird als das Zugriffsverfahren mit höherer Latenz.

11. Verfahren in einem Telekommunikationsnetz, wobei das Telekommunikationsnetz einen Zellknoten umfasst, der zum Kommunizieren mit einem mobilen Endgerät betreibbar ist, wobei das Verfahren umfasst:
Bestimmen (S901), durch das mobile Endgerät, ob ein Zugriffsverfahren mit niedriger Latenz oder ein Zugriffsverfahren mit höherer Latenz verwendet werden soll;
wenn bestimmt wird, dass das Zugriffsverfahren mit niedriger Latenz verwendet werden soll, Generieren (S902), durch das mobile Endgerät, einer Zugriffsanfragenachricht eines ersten Typs, wobei der erste Typ der Zugriffsanfragenachricht angibt, dass das mobile Endgerät das Zugriffsverfahren mit niedriger Latenz verwendet;
wenn bestimmt wird, dass das Zugriffsverfahren mit höherer Latenz verwendet werden soll, Generieren (S903), durch das mobile Endgerät, einer Zugriffsanfragenachricht eines zweiten Typs, wobei der zweite Typ der Zugriffsnachricht angibt, dass das mobile Endgerät das Zugriffsverfahren mit höherer Latenz verwendet; und
Übertragen (S904), durch das mobile Endgerät, der generierten Zugriffsanfragenachricht an den Zellknoten;
wenn bestimmt wird, dass ein Zugriffsverfahren mit niedriger Latenz verwendet werden soll, mindestens eines von:
Festlegen, durch das mobile Endgerät, eines kürzeren Zeitfensters zum Überwachen auf eine Zugriffsantwortnachricht von dem Zellknoten im Vergleich zu dem Zeitfenster zum Überwachen auf eine Zugriffsantwort, die vom Zellknoten als Antwort auf eine Zugriffsanfragenachricht des Typs für höhere Latenz gesendet wurde; und
Festlegen, durch das mobile Endgerät, mindestens eines Verarbeitungszeitfensters auf einen kürzeren Wert im Vergleich zu dem Wert für das entsprechende mindestens eine Verarbeitungszeitfenster für das Zugriffsverfahren mit höherer Latenz, wobei das Verarbeitungszeitfenster ein Zeitfenster ab dem Empfang einer Nachricht von dem Zellknoten angibt, in dem das mobile Endgerät die empfangene Nachricht verarbeitet, eine nachfolgende Nachricht gemäß dem entsprechenden Zugriffsverfahren generiert und die generierte nachfolgende Nachricht an den Zellknoten überträgt,
wenn die Zugriffsanfragenachricht empfangen wird, Bestimmen (S905), durch den Zellknoten, ob die Zugriffsanfragenachricht den ersten Typ oder den zweiten Typ aufweist;
wenn bestimmt wird, dass die Zugriffsanfrage vom ersten Typ ist, Übertragen (S906) einer Zugriffsantwortnachricht an das mobile Endgerät entsprechend dem Zugriffsverfahren mit niedriger Latenz; und
wenn bestimmt wird, dass die Zugriffsanfrage vom zweiten Typ ist, Übertragen (S907) einer Zugriffsantwortnachricht an das mobile Endgerät entsprechend dem Zugriffsverfahren mit höherer Latenz,
wenn bestimmt wird, dass die Zugriffsanfragenachricht vom Typ für niedrige Latenz ist, mindestens eines von:
Festlegen, durch den Zellknoten, eines kürzeren Zeitfensters zum Übertragen einer Zugriffsantwortnachricht im Vergleich zu dem Zeitfenster zum Übertragen einer Zugriffsantwort als Antwort auf eine Zugriffsanfragenachricht des Typs für höhere Latenz; und
Festlegen, durch den Zellknoten, mindestens eines Verarbeitungszeitfensters auf einen kürzeren Wert im Vergleich zu dem Wert für das entsprechende mindestens eine Verarbeitungszeitfenster für das Zugriffsverfahren mit höherer Latenz, wobei das Verarbeitungszeitfenster ein Zeitfenster ab dem Empfang einer Nachricht von dem mobilen Endgerät angibt, in dem der Zellknoten die empfangene Nachricht verarbeitet, eine nachfolgende Nachricht gemäß dem entsprechenden Zugriffsverfahren generiert und die generierte nachfolgende Nachricht an das mobile Endgerät überträgt,
wobei das Zugriffsverfahren mit höherer Latenz und das Zugriffsverfahren mit niedriger Latenz Nachrichtenabfolgen umfassen, die dieselbe Anzahl an Nachrichten umfassen.

12. Mobiles Endgerät zum Verwenden in einem Telekommunikationsnetz, wobei das mobile Endgerät zum Kommunizieren mit einem Zellknoten des Telekommunikationsnetzes betreibbar ist, wobei das mobile Endgerät ferner konfiguriert ist zum:
Bestimmen (S901), ob ein Zugriffsverfahren mit niedriger Latenz oder ein Zugriffsverfahren mit höherer Latenz verwendet werden soll;
Generieren (S902), wenn bestimmt wird, dass das Zugriffsverfahren mit niedriger Latenz verwendet werden soll, einer Zugriffsanfragenachricht eines ersten Typs, wobei der erste Typ der Zugriffsanfragenachricht angibt, dass das mobile Endgerät das Zugriffsverfahren mit niedriger Latenz verwendet;
Generieren (S903), wenn bestimmt wird, dass das Zugriffsverfahren mit höherer Latenz verwendet werden soll, einer Zugriffsanfragenachricht eines zweiten Typs, wobei der zweite Typ der Zugriffsnachricht angibt, dass das mobile Endgerät das Zugriffsverfahren mit höherer Latenz verwendet;
Übertragen (S904) der generierten Zugriffsanfragenachricht an den Zellknoten; und
wenn bestimmt wird, dass ein Zugriffsverfahren mit niedriger Latenz verwendet werden soll, mindestens eines von:
Festlegen eines kürzeren Zeitfensters zum Überwachen auf eine Zugriffsantwortnachricht von dem Zellknoten im Vergleich zu dem Zeitfenster zum Überwachen auf eine Zugriffsantwort, die vom Zellknoten als Antwort auf eine Zugriffsanfragenachricht des Typs für höhere Latenz gesendet wurde; und
Festlegen mindestens eines Verarbeitungszeitfensters auf einen kürzeren Wert im Vergleich zu dem Wert für das entsprechende mindestens eine Verarbeitungszeitfenster für das Zugriffsverfahren mit höherer Latenz, wobei das Verarbeitungszeitfenster ein Zeitfenster ab dem Empfang einer Nachricht von dem Zellknoten angibt, in dem das mobile Endgerät die empfangene Nachricht verarbeitet, eine nachfolgende Nachricht gemäß dem entsprechenden Zugriffsverfahren generiert und die generierte nachfolgende Nachricht an den Zellknoten überträgt,
wobei das Zugriffsverfahren mit höherer Latenz und das Zugriffsverfahren mit niedriger Latenz Nachrichtenabfolgen umfassen, die dieselbe Anzahl an Nachrichten umfassen.

13. Zellknoten zum Verwenden in einem Telekommunikationsnetz, wobei der Zellknoten zum Kommunizieren mit einem mobilen Endgerät betreibbar ist, wobei der Zellknoten ferner betreibbar ist zum:
Empfangen einer Zugriffsanfragenachricht von dem mobilen Endgerät;
Bestimmen (S905), ob die Zugriffsanfragenachricht einen ersten Typ oder einen zweiten Typ aufweist, wobei der erste Typ der Zugriffsanfragenachricht angibt, dass das mobile Endgerät ein Zugriffsverfahren mit niedriger Latenz verwendet, und wobei der zweite Typ der Zugriffsanfragenachricht angibt, dass das mobile Endgerät ein Zugriffsverfahren mit höherer Latenz verwendet;
Übertragen (S906), wenn bestimmt wird, dass die Zugriffsanfrage vom ersten Typ ist, einer Zugriffsantwortnachricht an das mobile Endgerät entsprechend dem Zugriffsverfahren mit niedriger Latenz;
Übertragen (S907), wenn bestimmt wird, dass die Zugriffsanfrage vom zweiten Typ ist, einer Zugriffsantwortnachricht an das mobile Endgerät entsprechend dem Zugriffsverfahren mit höherer Latenz; und
wenn bestimmt wird, dass die Zugriffsanfragenachricht vom Typ für niedrige Latenz ist, mindestens eines von:
Festlegen eines kürzeren Zeitfensters zum Übertragen einer Zugriffsantwortnachricht im Vergleich zu dem Zeitfenster zum Übertragen einer Zugriffsantwort als Antwort auf eine Zugriffsanfragenachricht des Typs für höhere Latenz; und
Festlegen mindestens eines Verarbeitungszeitfensters auf einen kürzeren Wert im Vergleich zu dem Wert für das entsprechende mindestens eine Verarbeitungszeitfenster für das Zugriffsverfahren mit höherer Latenz, wobei das Verarbeitungszeitfenster ein Zeitfenster ab dem Empfang einer Nachricht von dem mobilen Endgerät angibt, in dem der Zellknoten die empfangene Nachricht verarbeitet, eine nachfolgende Nachricht gemäß dem entsprechenden Zugriffsverfahren generiert und die generierte nachfolgende Nachricht an das mobile Endgerät überträgt,
wobei das Zugriffsverfahren mit höherer Latenz und das Zugriffsverfahren mit niedriger Latenz Nachrichtenabfolgen umfassen, die dieselbe Anzahl an Nachrichten umfassen.

14. Telekommunikationsnetz, wobei das Telekommunikationsnetz einen Zellknoten umfasst, der zum Kommunizieren mit einem mobilen Endgerät betreibbar ist, wobei:
wobei das mobile Endgerät betreibbar ist zum:
Bestimmen (S901), ob ein Zugriffsverfahren mit niedriger Latenz oder ein Zugriffsverfahren mit höherer Latenz verwendet werden soll;
Generieren (S902), wenn bestimmt wird, dass das Zugriffsverfahren mit niedriger Latenz verwendet werden soll, einer Zugriffsanfragenachricht eines ersten Typs, wobei der erste Typ der Zugriffsanfragenachricht angibt, dass das mobile Endgerät das Zugriffsverfahren mit niedriger Latenz verwendet;
Generieren (S903), wenn bestimmt wird, dass das Zugriffsverfahren mit höherer Latenz verwendet werden soll, einer Zugriffsanfragenachricht eines zweiten Typs, wobei der zweite Typ der Zugriffsnachricht angibt, dass das mobile Endgerät das Zugriffsverfahren mit höherer Latenz verwendet;
Übertragen (S904) der generierten Zugriffsanfragenachricht an den Zellknoten; und
wenn bestimmt wird, dass ein Zugriffsverfahren mit niedriger Latenz verwendet werden soll, mindestens eines von:
Festlegen eines kürzeren Zeitfensters zum Überwachen auf eine Zugriffsantwortnachricht von dem Zellknoten im Vergleich zu dem Zeitfenster zum Überwachen auf eine Zugriffsantwort, die vom Zellknoten als Antwort auf eine Zugriffsanfragenachricht des Typs für höhere Latenz gesendet wurde; und Festlegen mindestens eines Verarbeitungszeitfensters auf einen kürzeren Wert im Vergleich zu dem Wert für das entsprechende mindestens eine Verarbeitungszeitfenster für das Zugriffsverfahren mit höherer Latenz, wobei das Verarbeitungszeitfenster ein Zeitfenster ab dem Empfang einer Nachricht von dem Zellknoten angibt, in dem das mobile Endgerät die empfangene Nachricht verarbeitet, eine nachfolgende Nachricht gemäß dem entsprechenden Zugriffsverfahren generiert und die generierte nachfolgende Nachricht an den Zellknoten überträgt,
wobei der Zellknoten betreibbar ist zum:
Bestimmen (S905), wenn die Zugriffsanfragenachricht empfangen wird, ob die Zugriffsanfragenachricht den ersten Typ oder den zweiten Typ aufweist;
Übertragen (S906), wenn bestimmt wird, dass die Zugriffsanfrage vom ersten Typ ist, einer Zugriffsantwortnachricht an das mobile Endgerät entsprechend dem Zugriffsverfahren mit niedriger Latenz;
Übertragen (S907), wenn bestimmt wird, dass die Zugriffsanfrage vom zweiten Typ ist, einer Zugriffsantwortnachricht an das mobile Endgerät entsprechend dem Zugriffsverfahren mit höherer Latenz; und
wenn bestimmt wird, dass ein Zugriffsverfahren mit niedriger Latenz verwendet werden soll, mindestens eines von:
Festlegen eines kürzeren Zeitfensters zum Überwachen auf eine Zugriffsantwortnachricht von dem Zellknoten im Vergleich zu dem Zeitfenster zum Überwachen auf eine Zugriffsantwort, die vom Zellknoten als Antwort auf eine Zugriffsanfragenachricht des Typs für höhere Latenz gesendet wurde, und
Festlegen mindestens eines Verarbeitungszeitfensters auf einen kürzeren Wert im Vergleich zu dem Wert für das entsprechende mindestens eine Verarbeitungszeitfenster für das Zugriffsverfahren mit höherer Latenz, wobei das Verarbeitungszeitfenster ein Zeitfenster ab dem Empfang einer Nachricht von dem Zellknoten angibt, in dem das mobile Endgerät die empfangene Nachricht verarbeitet, eine nachfolgende Nachricht gemäß dem entsprechenden Zugriffsverfahren generiert und die generierte nachfolgende Nachricht an den Zellknoten überträgt,
wobei das Zugriffsverfahren mit höherer Latenz und das Zugriffsverfahren mit niedriger Latenz Nachrichtenabfolgen umfassen, die dieselbe Anzahl an Nachrichten umfassen.

15. Computerprogramm umfassend Anweisungen zum Durchführen des Verfahrens nach einem der Ansprüche 1 bis 10, bei Ausführung.

## Revendications

1. Procédé d'exploitation d'un terminal mobile dans un réseau de télécommunications, le terminal mobile étant exploitable pour communiquer avec un nœud de cellule du réseau de télécommunications, le procédé comprenant, par le terminal mobile :
la détermination (S901) de l'utilisation d'une procédure d'accès à faible latence ou d'une procédure d'accès à latence plus élevée ;
s'il est déterminé d'utiliser la procédure d'accès à faible latence, la génération (S902) d'un message de demande d'accès d'un type à faible latence, dans lequel le type à faible latence du message de demande d'accès indique que le terminal mobile utilise la procédure d'accès à faible latence ;
s'il est déterminé d'utiliser la procédure d'accès à latence plus élevée, la génération (S903) d'un message de demande d'accès d'un type à latence plus élevée, dans lequel le type à latence plus élevée du message d'accès indique que le terminal mobile utilise la procédure d'accès à latence plus élevée ;
la transmission (S904) du message de demande d'accès généré au nœud de cellule ; et
lors de la détermination d'utiliser une procédure d'accès à faible latence, au moins l'un parmi :
l'établissement d'une fenêtre temporelle plus courte pour l'écoute d'un message de réponse d'accès à partir du nœud de cellule comparativement à la fenêtre temporelle pour l'écoute d'une réponse d'accès envoyée par le nœud de cellule en réponse à un message de demande d'accès du type à latence plus élevée ; et
l'établissement d'au moins une fenêtre temporelle de traitement à une valeur plus courte comparativement à la valeur pour l'au moins une fenêtre temporelle de traitement correspondante pour la procédure d'accès à latence plus élevée, dans lequel la fenêtre temporelle de traitement fournit une fenêtre temporelle, à partir de la réception d'un message à partir du nœud de cellule, pour permettre au terminal mobile de traiter le message reçu, générer un message ultérieur conformément à la procédure d'accès correspondante et transmettre le message ultérieur généré au nœud de cellule,
dans lequel la procédure d'accès à latence plus élevée et la procédure d'accès à faible latence comprennent des séquences de messages comprenant le même nombre de messages.

2. Procédé selon l'une quelconque des revendications précédentes, dans lequel la génération (S902 ; S903) d'un message de demande d'accès comprend la sélection de l'un parmi un format de préambule pour des messages de demande d'accès à faible latence et un format de préambule pour des messages de demande d'accès à latence plus élevée et la génération d'un message de demande d'accès sur la base du format sélectionné, dans lequel un format de préambule est défini par au moins l'un parmi un temps de séquence et un temps de préfixe cyclique pour le message de demande d'accès.

3. Procédé selon l'une quelconque des revendications précédentes, dans lequel la génération (S902 ; S903) d'un message de demande d'accès comprend la sélection d'un préambule pour le message de demande d'accès, dans lequel le préambule est sélectionné à partir d'un premier ensemble de préambules destinés à générer un message de demande d'accès du type à faible latence ; et dans lequel le préambule est sélectionné à partir d'un ensemble distinct de préambules destinés à générer un message de demande d'accès du type à latence plus élevée.

4. Procédé selon l'une quelconque des revendications précédentes dans lequel la détermination (S901) est basée sur une ou plusieurs parmi : une indication de capacité de faible latence transmise par le nœud de cellule et une configuration de terminal mobile.

5. Procédé d'exploitation d'un nœud de cellule d'un réseau de télécommunications, le nœud de cellule étant exploitable pour communiquer avec un terminal mobile, le procédé comprenant, par le nœud de cellule :
la réception d'un message de demande d'accès à partir du terminal mobile ;
la détermination (S905) du fait que le message de demande d'accès est d'un type à faible latence ou d'un type à latence plus élevée, dans lequel le type à faible latence du message de demande d'accès indique que le terminal mobile utilise une procédure d'accès à faible latence et dans lequel le type à latence plus élevée du message de demande d'accès indique que le terminal mobile utilise une procédure d'accès à latence plus élevée ;
s'il est déterminé que la demande d'accès est du type à faible latence, la transmission (S906) d'un message de réponse d'accès au terminal mobile conformément à la procédure d'accès à faible latence ;
s'il est déterminé que la demande d'accès est du type à latence plus élevée, la transmission (S907) d'un message de réponse d'accès au terminal mobile conformément à la procédure d'accès à latence plus élevée,
lors de la détermination du fait que le message de demande d'accès est du type à faible latence, au moins l'un parmi :
l'établissement d'une fenêtre temporelle plus courte pour la transmission d'un message de réponse d'accès comparativement à la fenêtre temporelle pour la transmission d'une réponse d'accès en réponse à un message de demande d'accès du type à latence plus élevée ; et
l'établissement d'au moins une fenêtre temporelle de traitement à une valeur plus courte comparativement à la valeur pour l'au moins une fenêtre temporelle de traitement correspondante pour la procédure d'accès à latence plus élevée, dans lequel la fenêtre temporelle de traitement fournit une fenêtre temporelle, à partir de la réception d'un message à partir du terminal mobile, pour permettre au nœud de cellule de traiter le message reçu, générer un message ultérieur conformément à la procédure d'accès correspondante et transmettre le message ultérieur généré au terminal mobile,
dans lequel la procédure d'accès à latence plus élevée et la procédure d'accès à faible latence comprennent des séquences de messages comprenant le même nombre de messages.

6. Procédé selon la revendication 5 comprenant la transmission par le nœud de cellule d'une indication de capacité de faible latence indiquant que le nœud de cellule prend en charge les procédures d'accès à faible latence et/ou à latence plus élevée.

7. Procédé selon l'une quelconque des revendications 5 et 6 dans lequel la détermination (S905) comprend :
l'identification de l'un parmi un format de préambule de faible latence et un format de préambule de latence plus élevée qui sont utilisés dans le message de demande d'accès reçu, dans lequel un format de préambule est défini par au moins l'un parmi un temps de séquence et un temps de préfixe cyclique pour le message de demande d'accès ; et la détermination du fait que le message de demande d'accès est d'un type à faible latence ou d'un type à latence plus élevée sur la base du format de préambule identifié pour le message de demande d'accès reçu.

8. Procédé selon l'une quelconque des revendications 5 à 7 dans lequel la détermination (S905) comprend :
lors de l'identification d'un préambule pour le message de demande d'accès comme étant issu d'un premier ensemble de préambules utilisés pour la génération d'un message de demande d'accès du type à faible latence, la détermination du fait que le message de demande d'accès est du type à faible latence ; et lors de l'identification d'un préambule du message de demande d'accès comme étant issu d'un ensemble distinct de préambules utilisés pour la génération d'un message de demande d'accès du type à latence plus élevée, la détermination du fait que le message de demande d'accès est du type à latence plus élevée.

9. Procédé selon l'une quelconque des revendications précédentes, dans lequel les procédures d'accès à faible latence et à latence plus élevée sont chacune associées à un temps de réponse de faible latence et de latence plus élevée, respectivement, pour permettre au nœud de cellule de répondre au message de demande d'accès à partir du terminal mobile, le temps de réponse de faible latence étant plus court que l'autre temps de réponse,
dans lequel éventuellement un temps de réponse est l'un parmi une fenêtre temporelle, un créneau temporel ou une minuterie pour permettre au nœud de cellule de transmettre un message de réponse d'accès au terminal mobile.

10. Procédé selon l'une quelconque des revendications précédentes, dans lequel la procédure d'accès à faible latence est configurée pour s'achever en un temps plus court que la procédure d'accès à latence plus élevée.

11. Procédé dans un réseau de télécommunications, le réseau de télécommunications comprenant un nœud de cellule qui est exploitable pour communiquer avec un terminal mobile, le procédé comprenant :
la détermination (S901) par le terminal mobile de l'utilisation d'une procédure d'accès à faible latence ou d'une procédure d'accès à latence plus élevée ;
s'il est déterminé d'utiliser la procédure d'accès à faible latence, la génération (S902) par le terminal mobile d'un message de demande d'accès d'un premier type, dans lequel le premier type du message de demande d'accès indique que le terminal mobile utilise la procédure d'accès à faible latence ;
s'il est déterminé d'utiliser la procédure d'accès à latence plus élevée, la génération (S903) par le terminal mobile d'un message de demande d'accès d'un deuxième type, dans lequel le deuxième type du message d'accès indique que le terminal mobile utilise la procédure d'accès à latence plus élevée ; et
la transmission (S904) par le terminal mobile du message de demande d'accès généré au nœud de cellule ;
lors de la détermination d'utiliser une procédure d'accès à faible latence, au moins l'un parmi :
l'établissement par le terminal mobile d'une fenêtre temporelle plus courte pour l'écoute d'un message de réponse d'accès à partir du nœud de cellule comparativement à la fenêtre temporelle pour l'écoute d'une réponse d'accès envoyée par le nœud de cellule en réponse à un message de demande d'accès du type à latence plus élevée ; et
l'établissement par le terminal mobile d'au moins une fenêtre temporelle de traitement à une valeur plus courte comparativement à la valeur pour l'au moins une fenêtre temporelle de traitement correspondante pour la procédure d'accès à latence plus élevée, dans lequel la fenêtre temporelle de traitement fournit une fenêtre temporelle, à partir de la réception d'un message à partir du nœud de cellule, pour permettre au terminal mobile de traiter le message reçu, générer un message ultérieur conformément à la procédure d'accès correspondante et transmettre le message ultérieur généré au nœud de cellule,
lors de la réception du message de demande d'accès, la détermination (S905) par le nœud de cellule du fait que le message de demande d'accès est du premier type ou du deuxième type ;
s'il est déterminé que la demande d'accès est du premier type, la transmission (S906) d'un message de réponse d'accès au terminal mobile conformément à la procédure d'accès à faible latence ; et
s'il est déterminé que la demande d'accès est du deuxième type, la transmission (S907) d'un message de réponse d'accès au terminal mobile conformément à la procédure d'accès à latence plus élevée,
lors de la détermination du fait que le message de demande d'accès est du type à faible latence, au moins l'un parmi :
l'établissement par le nœud de cellule d'une fenêtre temporelle plus courte pour la transmission d'un message de réponse d'accès comparativement à la fenêtre temporelle pour la transmission d'une réponse d'accès en réponse à un message de demande d'accès du type à latence plus élevée ; et
l'établissement par le nœud de cellule d'au moins une fenêtre temporelle de traitement à une valeur plus courte comparativement à la valeur pour l'au moins une fenêtre temporelle de traitement correspondante pour la procédure d'accès à latence plus élevée, dans lequel la fenêtre temporelle de traitement fournit une fenêtre temporelle, à partir de la réception d'un message à partir du terminal mobile, pour permettre au nœud de cellule de traiter le message reçu, générer un message ultérieur conformément à la procédure d'accès correspondante et transmettre le message ultérieur généré au terminal mobile,
dans lequel la procédure d'accès à latence plus élevée et la procédure d'accès à faible latence comprennent des séquences de messages comprenant le même nombre de messages.

12. Terminal mobile pour une utilisation dans un réseau de télécommunications, le terminal mobile étant exploitable pour communiquer avec un nœud de cellule du réseau de télécommunications, le terminal mobile étant en outre configuré pour :
déterminer (S901) l'utilisation d'une procédure d'accès à faible latence ou d'une procédure d'accès à latence plus élevée ;
générer (S902), s'il est déterminé d'utiliser la procédure d'accès à faible latence, un message de demande d'accès d'un premier type, dans lequel le premier type du message de demande d'accès indique que le terminal mobile utilise la procédure d'accès à faible latence ;
générer (S903), s'il est déterminé d'utiliser la procédure d'accès à latence plus élevée, un message de demande d'accès d'un deuxième type, dans lequel le deuxième type du message d'accès indique que le terminal mobile utilise la procédure d'accès à latence plus élevée ;
transmettre (S904) le message de demande d'accès généré au nœud de cellule ; et
lors de la détermination d'utiliser une procédure d'accès à faible latence, au moins l'un parmi :
établir une fenêtre temporelle plus courte pour l'écoute d'un message de réponse d'accès à partir du nœud de cellule comparativement à la fenêtre temporelle pour l'écoute d'une réponse d'accès envoyée par le nœud de cellule en réponse à un message de demande d'accès du type à latence plus élevée ; et
établir au moins une fenêtre temporelle de traitement à une valeur plus courte comparativement à la valeur pour l'au moins une fenêtre temporelle de traitement correspondante pour la procédure d'accès à latence plus élevée, dans lequel la fenêtre temporelle de traitement fournit une fenêtre temporelle, à partir de la réception d'un message à partir du nœud de cellule, pour permettre au terminal mobile de traiter le message reçu, générer un message ultérieur conformément à la procédure d'accès correspondante et transmettre le message ultérieur généré au nœud de cellule,
dans lequel la procédure d'accès à latence plus élevée et la procédure d'accès à faible latence comprennent des séquences de messages comprenant le même nombre de messages.

13. Nœud de cellule pour une utilisation dans un réseau de télécommunications, le nœud de cellule étant exploitable pour communiquer avec un terminal mobile, le nœud de cellule étant en outre configuré pour :
recevoir un message de demande d'accès à partir du terminal mobile ;
déterminer (S905) si le message de demande d'accès est d'un premier type ou d'un deuxième type, dans lequel le premier type du message de demande d'accès indique que le terminal mobile utilise une procédure d'accès à faible latence et dans lequel le deuxième type du message de demande d'accès indique que le terminal mobile utilise une procédure d'accès à latence plus élevée ;
transmettre (S906), s'il est déterminé que la demande d'accès est du premier type, un message de réponse d'accès au terminal mobile conformément à la procédure d'accès à faible latence ;
transmettre (S907), s'il est déterminé que la demande d'accès est du deuxième type, un message de réponse d'accès au terminal mobile conformément à la procédure d'accès à latence plus élevée ; et
lors de la détermination du fait que le message de demande d'accès est du type à faible latence, au moins l'un parmi :
établir une fenêtre temporelle plus courte pour la transmission d'un message de réponse d'accès comparativement à la fenêtre temporelle pour la transmission d'une réponse d'accès en réponse à un message de demande d'accès du type à latence plus élevée ; et
établir au moins une fenêtre temporelle de traitement à une valeur plus courte comparativement à la valeur pour l'au moins une fenêtre temporelle de traitement correspondante pour la procédure d'accès à latence plus élevée, dans lequel la fenêtre temporelle de traitement fournit une fenêtre temporelle, à partir de la réception d'un message à partir du terminal mobile, pour permettre au nœud de cellule de traiter le message reçu, générer un message ultérieur conformément à la procédure d'accès correspondante et transmettre le message ultérieur généré au terminal mobile,
dans lequel la procédure d'accès à latence plus élevée et la procédure d'accès à faible latence comprennent des séquences de messages comprenant le même nombre de messages.

14. Réseau de télécommunications, le réseau de télécommunications comprenant un nœud de cellule qui est exploitable pour communiquer avec un terminal mobile, dans lequel :
dans lequel le terminal mobile est exploitable pour :
déterminer (S901) l'utilisation d'une procédure d'accès à faible latence ou d'une procédure d'accès à latence plus élevée ;
générer (S902), s'il est déterminé d'utiliser la procédure d'accès à faible latence, un message de demande d'accès d'un premier type, dans lequel le premier type du message de demande d'accès indique que le terminal mobile utilise la procédure d'accès à faible latence ;
générer (S903), s'il est déterminé d'utiliser la procédure d'accès à latence plus élevée, un message de demande d'accès d'un deuxième type, dans lequel le deuxième type du message d'accès indique que le terminal mobile utilise la procédure d'accès à latence plus élevée ;
transmettre (S904) le message de demande d'accès généré au nœud de cellule ; et
lors de la détermination d'utiliser une procédure d'accès à faible latence, au moins l'un parmi :
établir une fenêtre temporelle plus courte pour l'écoute d'un message de réponse d'accès à partir du nœud de cellule comparativement à la fenêtre temporelle pour l'écoute d'une réponse d'accès envoyée par le nœud de cellule en réponse à un message de demande d'accès du type à latence plus élevée ; et
établir au moins une fenêtre temporelle de traitement à une valeur plus courte comparativement à la valeur pour l'au moins une fenêtre temporelle de traitement correspondante pour la procédure d'accès à latence plus élevée, dans lequel la fenêtre temporelle de traitement fournit une fenêtre temporelle, à partir de la réception d'un message à partir du nœud de cellule, pour permettre au terminal mobile de traiter le message reçu, générer un message ultérieur conformément à la procédure d'accès correspondante et transmettre le message ultérieur généré au nœud de cellule,
dans lequel le nœud de cellule est exploitable pour :
déterminer (S905), lors de la réception du message de demande d'accès, si le message de demande d'accès est du premier type ou du deuxième type ;
transmettre (S906), s'il est déterminé que la demande d'accès est du premier type, un message de réponse d'accès au terminal mobile conformément à la procédure d'accès à faible latence ;
transmettre (S907), s'il est déterminé que la demande d'accès est du deuxième type, un message de réponse d'accès au terminal mobile conformément à la procédure d'accès à latence plus élevée ; et
lors de la détermination de l'utilisation d'une procédure d'accès du type à faible latence, au moins l'un parmi :
établir une fenêtre temporelle plus courte pour l'écoute d'un message de réponse d'accès à partir du nœud de cellule comparativement à la fenêtre temporelle pour l'écoute d'une réponse d'accès envoyée par le nœud de cellule en réponse à un message de demande d'accès du type à latence plus élevée ; et
établir au moins une fenêtre temporelle de traitement à une valeur plus courte comparativement à la valeur pour l'au moins une fenêtre temporelle de traitement correspondante pour la procédure d'accès à latence plus élevée, dans lequel la fenêtre temporelle de traitement fournit une fenêtre temporelle, à partir de la réception d'un message à partir du nœud de cellule, pour permettre au terminal mobile de traiter le message reçu, générer un message ultérieur conformément à la procédure d'accès correspondante et transmettre le message ultérieur généré au nœud de cellule,
dans lequel la procédure d'accès à latence plus élevée et la procédure d'accès à faible latence comprennent des séquences de messages comprenant le même nombre de messages.

15. Programme informatique comprenant des instructions destinées à effectuer le procédé de l'une quelconque des revendications 1 à 10, lorsqu'elles sont exécutées.
